# EUROPEAN PATENT APPLICATION

(11) **EP 4 769 724 A1**
(43) Date of publication of application: **01.07.2026**
(21) Application number: 24869600.7
(22) Date of filing: 01.03.2024
(51) Int. Cl.: H01M 50/244, H01M 50/209, H01M 50/249, H01M 50/103, H01M 50/15, B60K 1/04, B60N 2/005, B60N 2/01, B60L 50/64

(54) **BATTERY AND ELECTRICAL APPARATUS**

(30) Priority: 27.09.2023 CN 202322642524 U; 27.09.2023 CN 202311265770; 27.09.2023 CN 202311264394
(71) Applicant: Contemporary Amperex Technology Co., Ltd., Ningde, Fujian 352100 (CN)
(72) Inventor: JIN, Haizu, Fujian 352100 (CH); ZHAO, Fenggang, Fujian 352100 (CH); WU, Kai, Fujian 352100 (CH); CHEN, Wei, Fujian 352100 (CH); NIE, Xianzhen, Fujian 352100 (CH); ZHENG, Yulian, Fujian 352100 (CH); ZHOU, Wenlin, Fujian 352100 (CH)
(74) Representative: Gong, Jinping
(86) International application number: PCT/CN2024/079699
(87) International publication number: WO 2025/066028

(57) **Abstract**

A battery (10) is provided. The battery (10) comprises an accommodation housing (11) and a battery assembly (12); the accommodation housing (11) is provided with an accommodation cavity (111a), and the accommodation housing (11) comprises a first housing wall (111); the battery assembly (12) is accommodated in the accommodation cavity (111a), and the battery assembly (12) comprises a protruding part (12a); and the first housing wall (111) is provided with an accommodation portion (111b), and at least part of the protruding part (12a) is accommodated in the accommodation portion (111b).

## Description

### CROSS-REFERENCE TO RELATED APPLICATION

The present disclosure is based on Chinese Patent Application No. 202311265770.4, filed on September 27, 2023 and entitled "BATTERY AND ELECTRICAL APPARATUS", Chinese Patent Application No. 202322642524.8, filed on September 27, 2023 and entitled "VEHICLE", and Chinese Patent Application No. 202311264394.7, filed on September 27, 2023 and entitled "BATTERY CELL, COVER PLATE ASSEMBLY, BATTERY, AND ELECTRICAL APPARATUS", and claims priority to the aforementioned Chinese patent applications, the entire contents of which are incorporated herein by reference.

### TECHNICAL FIELD

Embodiments of the present disclosure relate to the technical field of battery production, in particular to a battery and an electrical apparatus.

### BACKGROUND

New energy batteries are more and more widely used in life and industry, for example, new energy vehicles equipped with batteries have been widely used. In addition, batteries are increasingly used in the field of energy storage, etc.

A battery includes an accommodation housing and a plurality of battery cells. The plurality of battery cells are disposed in the accommodation housing and are electrically connected to each other in series and parallel to achieve charging and discharging.

In order to achieve safe, accurate and efficient control of battery charging and discharging, the battery is provided with electrical components such as a busbar, a sampling structure, a battery management system and a high-voltage distribution unit, which are used to be electrically connected to the battery cells to achieve the control of the battery cells.

Because various electrical components have different sizes and shapes, they also need to occupy a space inside the accommodation housing. Therefore, it can easily lead to an increase in the overall size of the accommodation housing, which is not conducive to adaptability of the battery.

### SUMMARY OF THE INVENTION

In view of this, embodiments of the present disclosure expect to provide a battery and an electrical apparatus that contribute to enhancing a space utilization rate.

To achieve the above objective, technical solutions of the embodiments of the present disclosure are implemented as follows.

An embodiment of the present disclosure provides a battery, including:
an accommodation housing, provided with an accommodation cavity, wherein the accommodation housing includes a first housing wall; and
a battery assembly, accommodated in the accommodation cavity, wherein the battery assembly includes a protruding part; and
the first housing wall is provided with an accommodation portion, and at least part of the protruding part is accommodated in the accommodation portion.

In the battery of the embodiment of the present disclosure, the provision of the accommodation portion on the first housing wall facilitates a spatial shape in the accommodation housing to better adapt to a shape of an outer contour formed by the battery assembly, thereby lowering the requirements on the arrangement of all parts in the battery assembly, and moreover, facilitates the reduction of an overall size and volume of the accommodation housing, enhances a space utilization rate in the accommodation housing, reduces an overall volume of the battery, and improves the battery energy density.

In some embodiments, in a thickness direction of the first housing wall, a part of a projection of the battery assembly is located outside a projection of the accommodation portion. This allows the battery assembly to make fuller use of the space within the accommodation cavity, improving the space utilization rate of the battery, facilitating increasing a capacity of the battery.

In some embodiments, the battery assembly further includes a plurality of battery cells, the battery cells each include a case, the case has a first case wall, and the protruding part is disposed on the first case wall. In this way, a part of the first case wall can enter the accommodation portion, which helps to increase the volume of the battery cell and allows the space inside the accommodation housing to adapt to battery cells with different outer contour shapes. This helps to arrange the battery cells with different outer contour shapes more compactly arranged in the accommodation housing, thereby improving the energy density of the battery.

In some embodiments, the battery assembly further includes a busbar, each battery cell further includes a terminal post, the terminal post is disposed on the first case wall, the busbar is electrically connected to the terminal posts of two battery cells, the protruding part includes the busbar, and at least part of the busbar is accommodated in the accommodation portion. This allows the spatial shape in the accommodation housing to better adapt to the arrangement relationship between the busbar and the battery cells, so that the shape of the accommodation cavity can adapt to the shape of the battery cells. This helps to reduce the gap between the inner wall of the accommodation cavity and the battery cells, and improve the space utilization rate of the battery.

In some embodiments, at of least part of each terminal post is accommodated in the accommodation portion. In this way, the busbar connected to the terminal posts can be more rationally arranged in the accommodation portion, which helps to improve the space utilization rate in the accommodation cavity and thus helps to increase the capacity of the battery.

In some embodiments, the terminal posts of at least two battery cells are located in the same accommodation portion. This allows for the electrical connection of the terminal posts of different battery cells in one accommodation portion via the busbar, resulting in a more compact structure of the battery.

In some embodiments, spacing between an inner wall of the accommodation portion and the busbar in a first direction is not less than 1% of a size of the accommodation portion in the first direction, and the first direction is perpendicular to the thickness direction of the first housing wall. This helps to reduce the probability of the busbar coming into contact with the inner wall of the accommodation portion, allowing the battery assembly to function normally.

In some embodiments, a ratio of spacing between an inner wall of the accommodation portion and the busbar in a first direction to a size of the accommodation portion in the first direction ranges from 2% to 10%. This further helps to reduce the probability of the busbar coming into contact with the inner wall of the accommodation portion.

In some embodiments, the battery includes an insulator, and the insulator is disposed on the inner wall of the accommodation portion. In this way, by utilizing the insulating property of the insulator, the risk of contact between the battery assembly and the inner wall of the accommodation portion can be reduced, thereby reducing the risk of charge transfer between the battery assembly and the accommodation housing and lowering the risk of short circuits and other problems during use of the battery.

In some embodiments, the battery assembly includes a battery cell, the battery cell includes a terminal post, and the insulator is disposed opposite to the terminal post. This reduces the probability of the terminal post coming into contact with the accommodation housing due to relative movement between the battery assembly and the accommodation portion, thus reducing the risk of a short circuit in the battery cell caused by contact between the terminal post and the accommodation housing.

In some embodiments, the first case wall includes a bulge, the protruding part includes the bulge, and at least part of the bulge is accommodated in the accommodation portion. Thus, the bulge is located in the accommodation portion, it is beneficial to reducing spacing between other parts of the first case wall and the inner wall of the accommodation cavity, which is beneficial to reducing the volume of the accommodation cavity, and in turn, to reducing three-dimensional sizes of the accommodation housing, reducing the overall volume of the battery, and facilitating the improvement of the energy density and space utilization rate of the battery.

In some embodiments, the bulge is provided with the terminal post. This helps to improve the space utilization rate in the bulge, and reduces a redundant volume in the case, making the space in the battery cell more compact. This, in turn, helps to reduce the overall volume and outer contour size of the battery cell, thereby increasing the number of battery cells that can be accommodated in the battery, and improving the energy density and space utilization rate of the battery.

In some embodiments, the number of the terminal posts is two, polarities of the terminal posts are opposite, and the two terminal posts are disposed on the same bulge. This allows for the provision of mounting positions for the two terminal posts with only one bulge manufactured, which helps to reduce manufacturing steps for the first case wall, and lower production costs.

In some embodiments, the number of the terminal posts is two, polarities of the terminal posts are opposite, and the two terminal posts are respectively disposed on two bulges. In this way, on the one hand, it helps to reduce the volume of a single bulge, making the structure more compact and thus reducing the size of the battery; and on the other hand, it helps to separate the two terminal posts, reducing the risk of short circuits between the two terminal posts due to a connection and improving the use safety of the battery cell.

In some embodiments, the two terminal posts are spaced apart in a length direction of the first case wall. This makes the spacing between the two bulges as large as possible, allowing a part of the first case wall between the two bulges to form a larger-area flat region. This facilitates the arrangement of other parts, in the battery, with larger outer contour sizes in this region under a condition of a certain volume in the battery, providing convenience for the arrangement of other parts in the battery. At the same time, it is conducive to reducing the volume of the battery, improving the space utilization rate in the battery, and making the volume of the battery more compact.

In some embodiments, the two terminal posts are spaced apart in a width direction of the first case wall. In this way, the two terminal posts are disposed in the width direction of the first case wall, which helps to shorten the distance between terminal posts of different polarities between two adjacent battery cells, thereby helping to reduce the size of the busbar and thus reduce the size of the battery.

In some embodiments, the battery cell further includes an electrode assembly, the electrode assembly is accommodated in the case, a part of the first case wall is concave to form an avoidance groove, the avoidance groove is located on a side of the bulge close to the electrode assembly, and a part of the electrode assembly is located in the avoidance groove. In this way, it facilitates that the first case wall can be as close as possible to the electrode assembly under a condition of a certain size of the first case wall, so that as much part of the electrode assembly can extend into the avoidance groove as possible while the volume in the case can be effectively reduced, which is conducive to the reduction of the redundant volume in the battery cell, making the space in the battery cell more compact. This, in turn, helps to reduce the overall volume and outer contour size of the battery cell, thereby increasing the number of battery cells that can be accommodated in the battery, and improving the energy density and space utilization rate of the battery.

In some embodiments, the electrode assembly includes a main body and a tab, the tab is disposed on an edge of one side of the main body and is electrically connected to the main body, and at least part of the tab is located in the avoidance groove.

In some embodiments, at least part of the tab is located in the accommodation portion, which helps to improve the space utilization rate of the space in the accommodation housing and make the part of the battery cell located outside the accommodation portion more regular in shape.

In some embodiments, the battery cell further includes a terminal post, the terminal post is disposed on the first case wall, the electrode assembly further includes an adapter piece, the tab is electrically connected to the terminal post through the adapter piece, and at least part of the tab is located in the accommodation portion, which helps to improve the space utilization rate of the space in the accommodation housing and make the part of the battery cell located outside the accommodation portion more regular in shape;
and/or, at least part of the adapter piece is located in the accommodation portion, so that a part or all of the adapter piece is located in the accommodation portion, which can improve the space utilization rate of the space in the accommodation housing and helps to make the part of the battery cell located outside the accommodation portion more regular in shape.

In some embodiments, a part of the main body is located in the avoidance groove. In this way, it helps to improve the space utilization rate of the space in the accommodation housing.

In some embodiments, the case includes a cover plate and a case body, the cover plate covers an opening of the case body, and the bulge is disposed on the cover plate. Thus, by disposing the bulge on the cover plate, it is beneficial to allowing a part of the electrode assembly to directly enter or exit the space of the bulge during the process of mounting or removing the cover plate, thereby improving the mounting and removal efficiency of the battery cell;
and/or, the bulge is disposed on the case body, so that during the assembly of the battery cell, a part of the electrode assembly can be placed into the space of the bulge first, and a stop fit is achieved on the electrode assembly through the bulge, reducing the probability that the electrode assembly moves and fails to function during the process of removing and mounting the cover plate.

In some embodiments, the number of the bulges on the first case wall is two, and each of the two bulges is located at one end of two opposite ends of the first case wall. In this way, it is convenient for each bulge to be correspondingly electrically connected to the terminal post of the same polarity as well as an electrode piece, which helps to reduce the possibility of a short circuit, allowing a part of the first case wall between the two bulges to form a larger-area flat region. This facilitates the arrangement of other parts, in the battery, with larger outer contour sizes in this region under a condition of a certain volume in the battery, providing convenience for the arrangement of other parts in the battery. At the same time, it is conducive to reducing the volume of the battery, improving the space utilization rate in the battery, and making the volume of the battery more compact.

In some embodiments, a distance between the bulge and one end of the first case wall in the length direction is greater than a distance between the bulge and the other end of the first case wall in the length direction. Thus, it facilitates the arrangement of other parts, in the battery, with larger outer contour sizes in the larger-area region under a condition of a certain volume in the battery, providing convenience for the arrangement of other parts in the battery. At the same time, it is conducive to reducing the volume of the battery, improving the space utilization rate in the battery, and making the volume of the battery more compact.

In some embodiments, the bulge is located at one end of the first case wall in the length direction of the first case wall. In this way, it is possible to maximize the area of the region of the first case wall located at the other end away from the bulge in the length direction of the first case wall, thus facilitating the arrangement of other parts, in the battery, with larger outer contour sizes in this region, providing convenience for the arrangement of other parts in the battery. At the same time, it is conducive to reducing the volume of the battery, improving the space utilization rate in the battery, and making the volume of the battery more compact.

In some embodiments, the bulge is located in a central position of the first case wall in the length direction of the first case wall. This allows the structure of the battery cell to be symmetrical about a first central plane, so as to facilitate the adjustment of the placement direction when the plurality of battery cells are arranged in the battery, thereby improving the adaptability of the battery cells.

In some embodiments, spacing between a central position of the first case wall in the length direction thereof and a central position of the bulge in the length direction of the first case wall is first spacing, and a ratio of the first spacing to a length size of the first case wall is greater than 0 and does not exceed 47.5%. In this way, it is beneficial to making the first case wall to form a larger-area flat region in the length direction of the first case wall, thus facilitating the arrangement of other parts, in the battery, with larger outer contour sizes in this region, providing convenience for the arrangement of other parts in the battery.

In some embodiments, the ratio of the first spacing to the length size of the first case wall ranges from 40% to 47.5%. In this way, it is further beneficial to making the bulge to form a larger-area flat region along two sides or one side of the length direction of the first case wall, thus facilitating the arrangement of other parts, in the battery, with larger outer contour sizes in this region.

In some embodiments, a central position of the first case wall in the width direction thereof coincides with a central position of the bulge in the width direction of the first case wall. In this way, it is further beneficial to forming a larger-area flat region in the width direction of the first case wall, thus facilitating the arrangement of other parts, in the battery, with larger outer contour sizes in this region.

In some embodiments, spacing between a central position of the first case wall in the width direction thereof and a central position of the bulge in the width direction of the first case wall is second spacing, and a ratio of the second spacing to a width size of the first case wall is greater than 0 and does not exceed 25%. This allows for certain redundancy in the size of the bulge in the width direction, facilitating sealing between the first case wall and other parts.

In some embodiments, a length size of the battery cell is not less than 350 mm, which is beneficial to an electrochemical reaction of the electrode assembly and an electrolyte in the battery cell to store or release sufficient electrical energy, and beneficial to the total electrical energy in the battery to meet the demands;
and/or, a width size of the battery cell ranges from 5 mm to 50 mm, which makes the battery cell easy to carry in the size and better adapt to accommodation housings of different sizes;
and/or, a height size of the battery cell ranges from 80 mm to 200 mm, which makes the battery cell easy to carry in the size and better adapt to accommodation housings of different sizes.

In some embodiments, a length direction of the bulge is the same as that of the first case wall, and a ratio of a length size of the bulge to the length size of the first case wall ranges from 2.5% to 97.5%, which is beneficial to making the space in the bulge to meet the requirement of accommodating a part of the electrode assembly;
and/or, a width direction of the bulge is the same as that of the first case wall, and a ratio of a width size of the bulge to the width size of the first case wall ranges from 25% to 100%, which is beneficial to making the space in the bulge to meet the requirement of accommodating a part of the electrode assembly;
and/or, a height size of the bulge does not exceed 45 mm, which is beneficial to making the space in the bulge to meet the requirement of accommodating a part of the electrode assembly.

In some embodiments, a length direction of the bulge is the same as that of the first case wall, and a ratio of a length size of the bulge to the length size of the first case wall ranges from 5% to 40%, which is more beneficial to making the space in the bulge to meet the requirement of accommodating a part of the electrode assembly;
and/or, a width direction of the bulge is the same as that of the first case wall, and a ratio of a width size of the bulge to the width size of the first case wall ranges from 60% to 90%, which is more beneficial to making the space in the bulge to meet the requirement of accommodating a part of the electrode assembly;
and/or, a height size of the bulge ranges from 2 mm to 10 mm, which is further beneficial to making the space in the bulge to meet the requirement of accommodating a part of the electrode assembly.

In some embodiments, the battery cell includes an explosion-proof valve, and the explosion-proof valve is located on the bulge, which is beneficial to improving the space utilization rate of the space in the bulge, making the space in the battery cell more compact and thus reducing the total volume and outer contour size of the battery cell; or, the explosion-proof valve and the bulge are located on the first case wall, and the explosion-proof valve is spaced apart from the bulge, which is beneficial to reducing the volume of the bulge and can take advantage of a larger arrangement region on the first case wall. On one hand, it facilitates the arrangement of the explosion-proof valve with a larger opening flow rate, further reducing the probability of the battery cell exploding. On the other hand, it allows a spray direction of high-temperature gas flow, after the explosion-proof valve is turned on, to adapt to the arrangement of the battery cells in the battery, improving the use safety of the battery.

In some embodiments, the battery cell includes an explosion-proof valve, and the explosion-proof valve is located on a wall face in an outer surface of the battery cell facing away from the first case wall, which helps to make the sprayed high-temperature gas flow away from other parts in the battery that are electrically connected to the bulge, thereby reducing the impact of the high-temperature gas flow on other battery cells and other parts, reducing the probability of a chain reaction of thermal runaway in the battery, and improving the use safety of the battery;
or, the explosion-proof valve is located on a wall face in the outer surface of the battery cell adjacent to the first case wall, so that the spray direction of the high-temperature gas flow sprayed from the explosion-proof valve is away from other parts in the battery that are electrically connected to the bulge, thereby reducing the impact of the high-temperature gas flow on other battery cells and other parts, reducing the probability of a chain reaction of a thermal runaway in the battery, and improving the use safety of the battery.

In some embodiments, one battery cell includes a plurality of bulges, and the plurality of bulges are located in the same accommodation portion. This helps to reduce the number of bosses, thereby reducing manufacturing steps for the bosses, lowering production costs, reducing the difficulty of mutual coordination and assembly of the bosses and the accommodation portion during battery assembly, and improving the efficiency of manufacturing operations.

In some embodiments, the bulges of the plurality of battery cells are located in the same accommodation portion. This helps to further reduce the number of bosses, thereby lowering production costs, reducing the difficulty of mutual coordination and assembly of the bosses and the accommodation portion during battery assembly, and improving the efficiency of manufacturing operations. At the same time, it facilitates the arrangement of a sampling member, a busbar, and other parts in the same accommodation portion to electrically connect the battery cells and acquire various information of the battery cells.

In some embodiments, one battery cell includes a plurality of bulges, the first housing wall includes a plurality of accommodation portions, and the respective bulges in one single battery cell are respectively located in the different accommodation portions. In this way, electrical connections are achieved between the respective battery cells in the same group through the same accommodation portion.

In some embodiments, the plurality of battery cells are arranged in the first direction, one battery cell includes a plurality of bulges, and at least part of the bulges is located at one end of the battery cell in the first direction; and in two battery cells adjacent to each other in the first direction, the bulges on the two battery cells, located at one ends close to each other in the first direction, are located in the same accommodation portion. This reduces the probability of short circuits caused by electrical connection due to accidental contact and other reasons between components such as the terminal post disposed on the bulge, thus improving the use safety of the battery.

In some embodiments, the battery assembly further includes a sampling member, and at least part of the sampling member is accommodated in the accommodation portion; this allows the shape of the accommodation cavity to better adapt to the shape of the case of the battery cell, and under the premise that the volume of the accommodation cavity is fixed, it is beneficial to increasing the volume of the case, thereby increasing the energy density of the battery;
and/or, the battery assembly further includes a battery management system, and at least part of the battery management system is accommodated in the accommodation portion, which allows the shape of the accommodation portion to better adapt to the outer contour shape of the battery management system, reducing the arrangement requirements of the battery management system; it helps to reduce the overall size and volume of the accommodation housing and improve the space utilization rate in the accommodation housing;
and/or, the battery assembly further includes a relay, and at least part of the relay is accommodated in the accommodation portion, which allows the shape of the accommodation portion to better adapt to the outer contour shape of the relay, reducing the arrangement requirements of the relay; it helps to reduce the overall size and volume of the accommodation housing and improve the space utilization rate in the accommodation housing;
and/or, the battery assembly further includes a high-voltage distribution unit, and at least part of the high-voltage distribution unit is accommodated in the accommodation portion, which allows the shape of the accommodation portion to better adapt to the outer contour shape of the high-voltage distribution unit, reducing the arrangement requirements of the high-voltage distribution unit; it helps to reduce the overall size and volume of the accommodation housing and improve the space utilization rate in the accommodation housing;
and/or, the battery assembly further includes a high and low voltage wiring harness, and at least part of the high and low voltage wiring harness is accommodated in the accommodation portion, which allows the shape of the accommodation portion to better adapt to the wiring arrangement of the high and low voltage wiring harness, reducing the risk of damage to the high and low voltage wiring harness by bending and extrusion, helping to reduce the overall size and volume of the accommodation housing and improving the space utilization rate in the accommodation housing.

In some embodiments, the accommodation portion includes a first accommodation sub-portion and a second accommodation sub-portion, a part of the protruding part is accommodated in a space of the first accommodation sub-portion, and the other part of the protruding part is accommodated in a space of the second accommodation sub-portion. In this way, the shapes of the first accommodation sub-portion and the second accommodation sub-portion can adapt to each other according to the actual outer contour shape of the protruding part. This helps to reduce the outer contour size and overall volume of the accommodation portion, so as to make the structure of the battery more compact, reduce the overall volume of the battery, and improve the energy density of the battery.

In some embodiments, the bulge on an outer surface of the first housing wall forms a boss, and the boss is located on a side of the accommodation portion facing away from the accommodation cavity. In this way, it is beneficial to making the region of the first housing wall provided with the bulge consistent with other thicknesses, which is beneficial to the overall size of the first housing wall, and in turn, to reducing three-dimensional sizes of the accommodation housing, reducing the overall volume of the battery, and facilitating the improvement of the energy density and space utilization rate of the battery.

In some embodiments, a length direction of the boss is the same as that of the accommodation cavity, and sizes of the boss and the accommodation cavity in the length direction are the same, which is beneficial to increasing the size of the accommodation portion in the length direction of the battery as much as possible, thereby facilitating the size and volume of the accommodation portion to adapt to protruding parts of various different sizes and shapes;
or, the length direction of the boss is the same as a width direction of the accommodation cavity, and a length size of the boss is the same as a width size of the accommodation cavity, which is beneficial to increasing the size of the accommodation portion in the width direction of the battery as much as possible, thereby facilitating the size and volume of the accommodation portion to adapt to protruding parts of various different sizes and shapes.

In some embodiments, a width size of the boss does not exceed 500 mm, so that, on the one hand, it is beneficial to making the surface of the first housing wall to have a larger flat region, so as to adapt to other parts in the electrical apparatus and reduce the adverse effects of the boss on the arrangement of other parts in the electrical apparatus; and on the other hand, it reduces the adverse effects of the reduced structural strength of the boss due to its large width size and reduces the probability of damage to parts in the accommodation portion due to deformation of the boss;
and/or, a height size of the boss does not exceed 300 mm, so that it can adapt to other parts in the electrical apparatus, reducing the adverse effect of the boss on the arrangement of other parts in the electrical apparatus; and at the same time, it reduces the probability that the boss is deformed and bent due to shear stress perpendicular to the height direction applied to the boss, thus damaging the protruding part in the accommodation portion.

In some embodiments, a width size of the boss ranges from 50 mm to 300 mm, thus facilitating the space in the accommodation portion to meet the arrangement requirements of the protruding part;
and/or, a height size of the boss ranges from 5 mm to 100 mm, thus facilitating the space in the accommodation portion to meet the arrangement requirements of the protruding part.

In some embodiments, the battery assembly further includes a battery cell, the battery cell includes a case, the case has a first case wall, the first case wall includes a bulge, at least part of the bulge is located in the accommodation portion, and a height size of the bulge does not exceed 77% of a height size of the boss. In this way, on the one hand, it is beneficial to making the bulge and the accommodation portion spaced apart in the height direction of the battery, so as to reduce the probability of damage caused by direct abutting between the bulge and the accommodation portion, and also to facilitate the arrangement of other parts of the battery assembly in the accommodation portion; and on the other hand, it allows the thickness of the boss to better protect the bulge.

In some embodiments, the height size of the bulge accounts for a range of 36% to 53% of the height size of the boss. In this way, the size of the space in the accommodation portion is further made to meet the demand for arranging other parts of the battery assembly, and it further beneficial to making the boss to have sufficient strength to protect the bulge.

In some embodiments, a height size of the protruding part does not exceed 94% of the height size of the boss. This is beneficial to reducing the probability of abutting between the protruding part and the boss in the vertical direction, thus reducing the probability of damage to the protruding part and the boss caused by abutting.

In some embodiments, the height size of the protruding part accounts for a range of 74% to 86% of the height size of the boss. This is beneficial to reducing the probability of abutting between the protruding part and the boss in the vertical direction, and beneficial to improving the space utilization rate of the protruding part to the accommodation portion.

In some embodiments, part or all of the boss is detachably configured, thus facilitating the inspection and repair of the battery assembly in the battery through a formed channel by detaching part or all of the boss, without having to completely disassemble a housing body, thereby simplifying the operation steps.

In some embodiments, the first housing wall includes a housing wall body and a mounting plate, the housing wall body is provided with a penetrating through hole, the through hole communicates with the accommodation cavity, an edge of the through hole is annularly provided with a mounting step extending in a direction away from the accommodation cavity, the mounting plate detachably covers the mounting step to seal the through hole, the mounting step and the mounting plate jointly form the boss, and an inner wall of the through hole and a surface of the mounting plate toward the accommodation cavity form the accommodation portion in an enclosing mode. In this way, after the boss is detached, the battery assembly located in the through hole and in the accommodation cavity can be inspected and repaired through an open part of the through hole.

In some embodiments, the battery includes a first adhesive layer, and the first adhesive layer adheres between an inner wall of the accommodation cavity and the battery assembly. In this way, the inner wall of the accommodation cavity and the battery assembly are bonded by the adhesive force of the first adhesive layer, so that the relative position between the battery assembly and the housing body can be kept fixed. At the same time, the first adhesive layer is formed by applying adhesive, which helps to improve operation efficiency.

In some embodiments, the battery includes a first adhesive layer, the accommodation portion is located on a top side of the accommodation housing in a height direction, a top wall of the battery cell in a height direction of the accommodation cavity is the first case wall, and the first adhesive layer adheres between an inner wall of a top side of the accommodation cavity in the height direction of the accommodation cavity and the first case wall. In this way, the first adhesive layer can play a role in separating and sealing, preventing the accommodation portion and objects in the accommodation cavity from entering each other. At the same time, the larger area of the first case wall can be used to apply as much adhesive as possible to form the first adhesive layer, thereby improving the adhesion and fixing effect.

And/or, the first adhesive layer adheres between an inner wall of a bottom side of the accommodation cavity in the height direction of the accommodation cavity and a bottom wall of the battery cell in the height direction of the accommodation cavity. This is beneficial to making uncured adhesive to avoid the parts of the terminal post, the sampling member and the busbar during the adhesive applying process, reducing the adverse effects of the adhesive on the normal operation of the parts in the battery. At the same time, the adhesive can be spread more evenly by utilizing the gravitational compression of the battery cell.

In some embodiments, the battery includes a temperature control assembly, and the temperature control assembly is sandwiched between the inner wall of the accommodation cavity and the battery assembly. In this way, the temperature control assembly absorbs heat generated during the operation of the battery assembly, reducing the operation temperature of the battery assembly and improving the use safety of the battery. At the same time, the temperature control assembly can directly radiate part of the heat to the outside through the housing wall of the accommodation housing directly, increasing the heat dissipation area and improving the temperature control effect.

In some embodiments, the temperature control assembly is located between the inner wall of the accommodation cavity and the first case wall. In this way, the advantage of the larger area of the first case wall can be better utilized to increase the contact area between the temperature control assembly and the battery cell, and the heat generated during the operation of the battery can be transferred to the housing wall more effectively and radiated to the outside, thereby improving the temperature control effect.

In some embodiments, the temperature control assembly is located between the inner wall of the top side of the accommodation cavity in the height direction of the accommodation cavity and a top surface of the battery assembly in the height direction of the accommodation cavity, so that the temperature control assembly is not affected by the gravitational compression of the battery assembly and thus the temperature control function is not affected.

And/or, the temperature control assembly is located between the inner wall of the bottom side of the accommodation cavity in the height direction of the accommodation cavity and a bottom surface of the battery assembly in the height direction of the accommodation cavity. In this way, the possibility of interference between the arrangement of the temperature control assembly and the protruding part is reduced.

In some embodiments, the battery includes a second adhesive layer, and the second adhesive layer adheres between the inner wall of the accommodation cavity and an outer surface of the temperature control assembly. This fixes the relative position between the temperature control assembly and the accommodation housing, reducing the probability of frictional damage caused by relative movement between the temperature control assembly and the accommodation housing. At the same time, it is convenient for the temperature control assembly to directly transfer heat to the accommodation housing and radiate the heat to the outside.

And/or, the battery includes a third adhesive layer, and the third adhesive layer adheres between the inner wall of the accommodation cavity and an outer surface of the battery assembly. This fixes the relative position between the temperature control assembly and the battery assembly, reducing the probability of frictional damage caused by relative movement between the temperature control assembly and the battery assembly, and the heat can be better transferred between the temperature control assembly and the battery assembly, improving the temperature control effect.

An embodiment of the present disclosure further provides an electrical apparatus, including the battery according to any one of the above embodiments. The battery serves as a power source for the electrical apparatus. In this way, by setting the fit between an accommodation portion and a protruding part, it is beneficial to reducing the overall volume of the electrical apparatus and making the structure of the electrical apparatus more compact.

An embodiment of the present disclosure further provides an electrical apparatus. The electrical apparatus is a vehicle, the vehicle includes a seat and the battery according to any one of the above embodiments, and a boss is located on a side of an accommodation housing facing the seat. In this way, it is beneficial to increasing the capacity of the battery in the vehicle, which in turn is beneficial to increasing the capacity of the battery, and beneficial to increasing the driving mileage of the vehicle. Simultaneously, it allows the flat housing wall of the accommodation housing to face the ground side, resulting in a smoother surface of a bottom side of the vehicle, reducing a drag coefficient of the vehicle and increasing a ground clearance of the vehicle. This prevents damage to the battery caused by increased drag from the boss or collisions with road debris during driving of the vehicle.

In some embodiments, the vehicle includes a vehicle body element, a bottom side of the vehicle body element is open, the battery is disposed in an open position of the vehicle body element to jointly form an occupant space with the vehicle body element in an enclosing mode, and the seat is located in the occupant space. This allows for an increase in the volume of the battery in a case of limitations on three-dimensional sizes of the vehicle. It also facilitates the use of a space in the occupant space by the bulge, thereby improving the space utilization rate in the occupant space.

In some embodiments, the vehicle includes a chassis, the vehicle body element is disposed on the chassis, the chassis includes the battery, and a first housing wall forms a bottom plate of the occupant space. In this way, the battery helps to improve the overall structural strength of the chassis. The first housing wall serves as the bottom plate of the occupant space, helping to improve the utilization rate of the space in the vehicle. At the same time, it helps to improve the structural strength of the entire occupant space structure and enhances the safety of the vehicle.

In some embodiments, in projections perpendicular to a vertical direction, part or all of the projection of the boss is located in a projection range of the seat. In this way, the boss utilizes the space under the seat, reducing the probability of an occupant touching the boss during the ride, thereby reducing the encroachment of disposing of the boss on the normal activity space of the occupant, improving the user experience, and increasing the space utilization rate in the vehicle.

In some embodiments, a plurality of seats are provided and spaced apart to form at least one row, a first gap is formed between the seats in the same row spaced apart in a width direction of the vehicle, the boss includes a first boss, and part or all of the first boss is located in the first gap.

In this way, the boss can utilize the space in the first gap, which improves the volume of the battery while reducing the probability of the occupant touching the boss during the ride, thereby reducing the interference of the boss with the normal activities of the occupant, and increasing the space utilization rate in the vehicle.

In some embodiments, the plurality of seats are divided into at least two rows spaced apart in a length direction of the vehicle, and the first boss extends in the length direction of the vehicle under another adjacent row of seats. Thus, on the one hand, the first boss extends in the length direction of the vehicle. With a fixed projected area of the first boss perpendicular to the vertical direction, it is beneficial to reducing the size of the first boss in the width direction of the vehicle. This helps to reduce the interference of the first boss with riding of a plurality of passengers in the vehicle, improves the user experience, reduces the probability of interference with passenger riding and activities, and helps to improve the space utilization rate of the space in the vehicle by the battery and increase the battery capacity. On the other hand, it allows the first boss to more utilize the space in the first gap, further improving the space utilization rate in the vehicle.

In some embodiments, the boss includes second bosses, and the two second bosses extend in the length direction of the vehicle and is located on a side of the seat in the width direction of the vehicle. This can reduce the interference of the second bosses on the leg and foot movements of the occupant, improving the use experience of the occupant.

In some embodiments, the number of second bosses is two, the two second bosses are respectively located at one end of the battery in the width direction of the vehicle, and the seat is located between the two second bosses. This increases the space for leg and foot movements of the occupant, further reduces the interference of the second bosses in leg and foot movements of the occupant, and effectively utilizes the space of an edge along the width of the vehicle.

In some embodiments, the second boss is spaced apart from the seat in the width direction of the vehicle, which helps to increase a movement space for the leg and foot movements of the occupant and improve riding experience of the user;
and/or, part of the second boss is located under the seat, which helps to reduce the sizes of the battery and the vehicle in the width direction, making the structure of the battery and the vehicle more compact.

In some embodiments, the boss includes one or more third bosses, the third boss extends in the width direction of the vehicle, and at least part of the third boss is located under the seats in the same row. In this way, the third boss can make full use of the space under the seat in the width direction of the vehicle. At the same time, the third boss can reduce the encroachment on the space between two adjacent rows of seats, reduce interference in the activities of occupants, and improve the occupant experience.

In some embodiments, the seat includes a seat base, a second gap is formed between at least part of the seat base and the battery which are spaced apart in a height direction of the vehicle, and at least part of the boss is located in the second gap and spaced apart from the seat base in the vertical direction. This reduces the probability of the boss being damaged by the pressure of occupant sitting due to direct contact between the boss and the seat base.

In some embodiments, the seat includes a leg, the seat base is spaced apart from the battery in the vertical direction to form the second gap, and the leg is connected between the seat base and the battery. This facilitates achieving the spacing between the seat base and the boss, resulting in a regular shape of the seat base that is easy to place. It also helps to release heat during battery operation, facilitates inspection, disassembly, assembly, and maintenance through the second gap, and allows the occupant to extend feet into the second gap, enabling the occupant to sit comfortably and improving ride comfort.

In some embodiments, a plurality of legs are provided, the plurality of legs are spaced apart in the width direction of the vehicle, and part or all of the boss is located between two legs adjacent to each other in the width direction of the vehicle. This facilitates the arrangement of the boss, utilizing the space between the two legs to improve the space utilization rate of the space in the vehicle by the battery and increase battery capacity.

In some embodiments, the seat base includes a cushion, and the boss is embedded in the cushion to support the seat base in the height direction of the vehicle. This helps to simplify the structure of the seat, improve the utilization rate of the space in the seat, and reduce production costs.

### BRIEF DESCRIPTION OF DRAWINGS

FIG. 1 is a schematic diagram of a vehicle in an embodiment of the present disclosure.
FIG. 2 is a schematic diagram of a battery in a first embodiment of the present disclosure.
FIG. 3 is a cross-sectional schematic diagram of the embodiment in FIG. 2.
FIG. 4 is an enlarged schematic diagram of a position A in FIG. 3.
FIG. 5 is a partially cross-sectional enlarged schematic diagram of a battery in a second embodiment of the present disclosure, wherein a cross-sectional enlarged position is the same as the position A in FIG. 3.
FIG. 6 is a schematic diagram of a battery in a third embodiment of the present disclosure.
FIG. 7 is a cross-sectional schematic diagram of a position B-B in the embodiment in FIG. 6.
FIG. 8 is an enlarged schematic diagram of a position C in FIG. 7.
FIG. 9 is a partially cross-sectional enlarged schematic diagram of a battery in a fourth embodiment of the present disclosure, wherein a cross-sectional enlarged position is the same as a position C in FIG. 6.
FIG. 10 is an exploded schematic diagram of the embodiment in FIG. 5.
FIG. 11 is a schematic diagram of a battery cell in a fifth embodiment of the present disclosure.
FIG. 12 is an exploded schematic diagram of the embodiment in FIG. 11.
FIG. 13 is a partially cross-sectional schematic diagram of the embodiment in FIG. 11.
FIG. 14 is a schematic diagram of a battery cell in a sixth embodiment of the present disclosure.
FIG. 15 is an exploded schematic diagram of the embodiment in FIG. 14.
FIG. 16 is a partially cross-sectional schematic diagram of the embodiment in FIG. 14.
FIG. 17 is a schematic diagram of a battery cell in a seventh embodiment of the present disclosure.
FIG. 18 is a schematic diagram of a battery cell in an eighth embodiment of the present disclosure.
FIG. 19 is a schematic diagram of a battery cell in a ninth embodiment of the present disclosure.
FIG. 20 is a schematic diagram of positions among a first central plane, a second central plane, a third central plane, and a fourth central plane in an embodiment of the present disclosure.
FIG. 21 is a schematic diagram of a relationship between a bulge and a total height of a battery cell in an embodiment of the present disclosure.
FIG. 22 is a schematic diagram of a battery cell in a tenth embodiment of the present disclosure.
FIG. 23 is a schematic diagram of a battery cell in an eleventh embodiment of the present disclosure.
FIG. 24 is a schematic diagram of a battery cell in a twelfth embodiment of the present disclosure.
FIG. 25 is a schematic diagram of a battery cell in a thirteenth embodiment of the present disclosure.
FIG. 26 is a schematic diagram of a battery in a fourteenth embodiment of the present disclosure.
FIG. 27 is a cross-sectional schematic diagram of the embodiment in FIG. 26.
FIG. 28 is an exploded schematic diagram of the embodiment in FIG. 26.
FIG. 29 is a schematic diagram of a battery in a fifteenth embodiment of the present disclosure.
FIG. 30 is a cross-sectional schematic diagram of the embodiment in FIG. 29 at D-D.
FIG. 31 is an enlarged schematic diagram of a position E in FIG. 30.
FIG. 32 is a partially cross-sectional enlarged schematic diagram of a battery in a sixteenth embodiment of the present disclosure, wherein a cross-sectional enlarged position is the same as a position E in FIG. 30.
FIG. 33 is an exploded schematic diagram of the embodiment in FIG. 29.
FIG. 34 is a schematic diagram of a battery in a seventeenth embodiment of the present disclosure.
FIG. 35 is a cross-sectional schematic diagram of the embodiment in FIG. 34.
FIG. 36 is an exploded schematic diagram of the embodiment in FIG. 34.
FIG. 37 is a schematic diagram of a battery in an eighteenth embodiment of the present disclosure.
FIG. 38 is an exploded schematic diagram of the embodiment in FIG. 37.
FIG. 39 is a schematic diagram of a battery in a nineteenth embodiment of the present disclosure.
FIG. 40 is an exploded schematic diagram of the embodiment in FIG. 39.
FIG. 41 is a schematic diagram of a battery in a twentieth embodiment of the present disclosure.
FIG. 42 is a cross-sectional schematic diagram of the embodiment in FIG. 41.
FIG. 43 is an exploded schematic diagram of the embodiment in FIG. 41.
FIG. 44 is a schematic diagram of a battery in a twenty-first embodiment of the present disclosure.
FIG. 45 is a cross-sectional schematic diagram of the embodiment in FIG. 44 in a position F-F.
FIG. 46 is a partial enlarged schematic diagram of a position G in FIG. 45.
FIG. 47 is an exploded schematic diagram of the embodiment in FIG. 44.
FIG. 48 is a schematic diagram of a battery in a twenty-second embodiment of the present disclosure.
FIG. 49 is a cross-sectional schematic diagram of the embodiment in FIG. 48.
FIG. 50 is an exploded schematic diagram of the embodiment in FIG. 48.
FIG. 51 is a schematic diagram of a battery in a twenty-third embodiment of the present disclosure.
FIG. 52 is a cross-sectional schematic diagram of the embodiment in FIG. 51 in a position H-H.
FIG. 53 is a partial enlarged schematic diagram of a position I in FIG. 51.
FIG. 54 is an exploded schematic diagram of the embodiment in FIG. 51.
FIG. 55 is an exploded schematic diagram of a battery in a twenty-fourth embodiment of the present disclosure.
FIG. 56 is an exploded schematic diagram of a battery in a twenty-fifth embodiment of the present disclosure.
FIG. 57 is a schematic diagram of a battery in a twenty-sixth embodiment of the present disclosure.
FIG. 58 is a cross-sectional schematic diagram of the embodiment in FIG. 57 in a position J-J.
FIG. 59 is a schematic diagram of arrangement of a battery and a seat from a first perspective in a twenty-seventh embodiment of the present disclosure.
FIG. 60 is a schematic diagram of arrangement of the embodiment in FIG. 59 from a second perspective.
FIG. 61 is a schematic diagram of arrangement of the embodiment in FIG. 59 from a third perspective.
FIG. 62 is a schematic diagram of arrangement of a battery and a seat from a first perspective in a twenty-eighth embodiment of the present disclosure.
FIG. 63 is a schematic diagram of the embodiment in FIG. 62 from another perspective.
FIG. 64 is a schematic diagram of arrangement of a battery and a seat in a twenty-ninth embodiment of the present disclosure.
FIG. 65 is a schematic diagram of arrangement of a battery and a seat from a fourth perspective in a thirtieth embodiment of the present disclosure.
FIG. 66 is a schematic diagram of arrangement of the embodiment in FIG. 65 from a fifth perspective.
FIG. 67 is a schematic diagram of arrangement of the embodiment in FIG. 65 from a sixth perspective.
FIG. 68 is a schematic diagram of arrangement of a battery and a seat from a seventh perspective in a thirty-first embodiment of the present disclosure.
FIG. 69 is a schematic diagram of arrangement of the embodiment in FIG. 68 from an eighth perspective.
FIG. 70 is a schematic diagram of arrangement of the embodiment in FIG. 68 from a ninth perspective.
FIG. 71 is an arrangement relationship among a vehicle body element, a seat, and a battery in an embodiment of the present disclosure.

### Description of reference numerals

100. Vehicle; 100a. Occupant space; 10. Battery; 11. accommodation housing; 111a. Accommodation cavity; 111b. Accommodation portion; 111c. First accommodation sub-portion; 111d. Second accommodation sub-portion; 111. first housing wall; 1111. Boss; 1111a. First boss; 1111b. Second boss; 1111c. Third boss; 1112. housing wall body; 1112a. Through hole; 1112b. Mounting step; 1113. Mounting plate; 1114. Sealing ring; 12. Battery assembly; 12a. Protruding part; 121. Battery cell; 1211. case; 1211a. Cover plate; 1211b. case body; 1212. First case wall; 1212a. Avoidance groove; 1212b. First central plane; 1212c. Second central plane; 1213. terminal post; 1214. Bulge; 1214a. Third central plane; 1214b. Fourth central plane; 1215. Electrode assembly; 1216. Main body; 1217. Tab; 1218. Explosion-proof valve; 1219. Adapter piece; 122. Busbar; 123. Sampling member; 124. Battery management system; 125. Relay; 126. High-voltage distribution unit; 127. High and low voltage wiring harness; 13. First adhesive layer; 14. Temperature control assembly; 15. Second adhesive layer; 16. Third adhesive layer; 17. Insulator; 20. Seat; 20a. First gap; 20b. Second gap; 21. Seat base; 211. Cushion; 22. Seat back; 23. Leg; 30. Controller; 40. Motor; 50. Vehicle body element; and 60. Chassis.

### DETAILED DESCRIPTION

It should be noted that in the case of no conflict, the embodiments in the present disclosure and the technical features in the embodiments may be combined with each other. The detailed descriptions in the specific embodiments should be understood as an explanation of the purpose of the present disclosure, and should not be regarded as an improper limitation on the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variations thereof in the specification of the present disclosure and in the description of accompanying drawings above are intended to cover non-exclusive inclusion.

At present, new energy batteries are increasingly used in daily life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace.

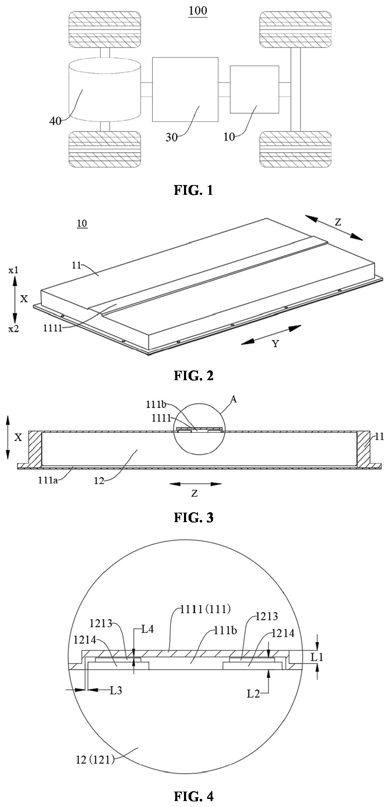

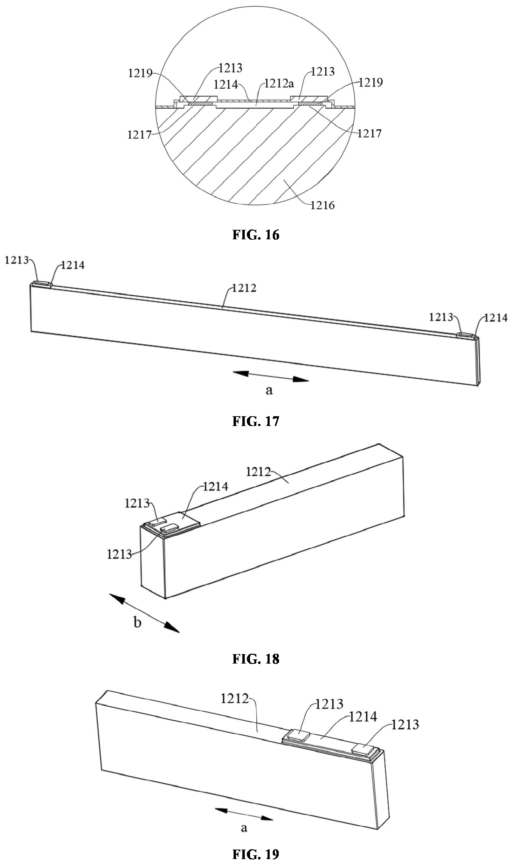

FIG. 1 is a schematic structural diagram of a vehicle 100 provided by an embodiment of the present disclosure. The vehicle 100 may be a fuel vehicle, a gas vehicle or a new energy vehicle. The new energy vehicle may be an all-electric vehicle, a hybrid vehicle, an extended-range vehicle, or the like. As shown in FIG. 17, the vehicle 100 is provided with a battery 10 inside. The battery 10 may be disposed at a bottom or head or tail of the vehicle 100. The battery 10 may be used as a power supply for the vehicle 100, for example, the battery 10 may be used as an operating power source for the vehicle 100. The vehicle 100 may further include a controller 30 and a motor 40. The controller 30 is configured to control the battery 10 to supply power to the motor 40, for example, for the operation power demand for starting, navigation and driving of the vehicle 100.

In some embodiments of the present application, the battery 10 not only may serve as an operating power source of the vehicle 100, and also may serve as a driving power source of the vehicle 100, thus replacing or partially replacing fuel or natural gas to provide driving power for the vehicle 100.

In the embodiment of the present disclosure, the battery may be a battery cell. The battery cell refers to a basic unit that can realize mutual conversion of chemical energy and electrical energy, and may be used to make a battery module or a battery pack to provide power to an electrical apparatus. The battery cell may be a secondary battery, and the secondary battery refers to a battery cell that can be used continually by activating an active material by means of charging after the battery cell is discharged. The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present disclosure.

The battery cell generally includes an electrode assembly. The electrode assembly includes a positive electrode, a negative electrode, and a spacer. During charging and discharging of the battery cell, active ions (such as lithium ions) are intercalated and deintercalated back and forth between the positive electrode and the negative electrode. The spacer is arranged between the positive electrode and the negative electrode, and may play a role in preventing a short circuit between the positive electrode and the negative electrode while allowing active ions to pass through.

In some embodiments, the battery cell further includes an electrolyte, and the electrolyte plays a role in conducting ions between the positive electrode and the negative electrode. The type of the electrolyte is not specifically limited in the present disclosure, and may be selected according to needs. The electrolyte may be liquid, gel or solid.

In some embodiments, the battery cell may include a case. The case is used to encapsulate components such as the electrode assembly and an electrolyte. The case may be a steel case, an aluminum case, a plastic case (such as polypropylene), a composite metal case (such as a copper-aluminum composite case), an aluminum-plastic film, or the like.

As an example, the battery cell may be a cylindrical battery cell, a prismatic battery cell, a pouch battery cell, or a battery cell in another shape. The prismatic battery cell includes a square-case battery cell, a blade-shaped battery cell, and a polygon prism battery. For example, the polygon prism battery may be a hexagonal prism battery or the like, which is not specifically limited in the present disclosure.

In the embodiments of the present disclosure, the battery may also be a single physical module (such as a battery module or a battery) including one or more battery cells to provide a higher voltage and capacity. When a plurality of battery cells are provided, the plurality of battery cells are connected in series, in parallel, or in series-parallel through a busbar.

In the description of the embodiments of the present disclosure, the technical terms "first," "second," "third," and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, a character "/" herein generally indicates that front and back associated objects are in an "or" relationship.

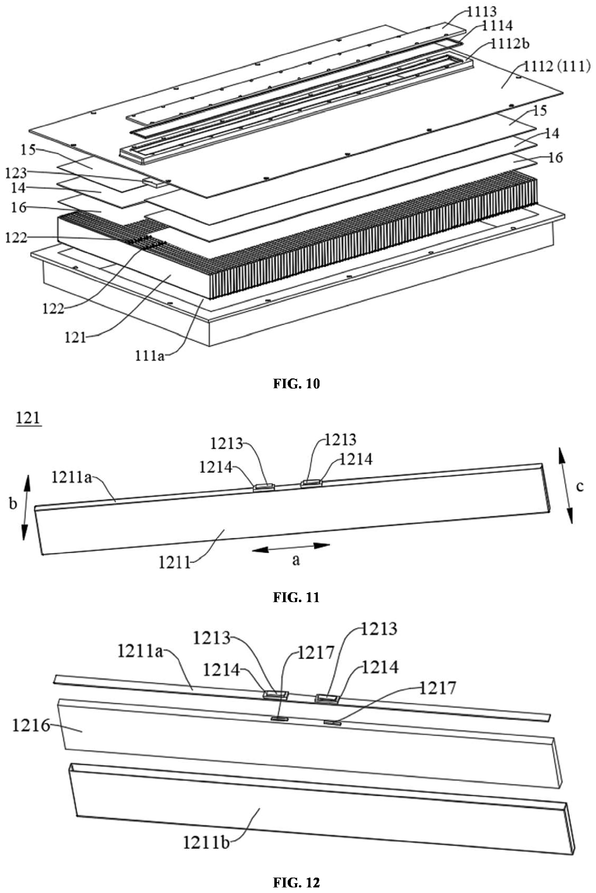

In the description of the embodiments of the present disclosure, for ease of explanation, as shown by arrows in FIGS. 2, 3, 6, 59, 60, and 61, a direction where the arrow X is located is a "height direction of the battery" and a "height direction of the vehicle", a direction where x1 is located is a "top", a direction where x2 is located is a "bottom", a direction where the arrow Y is located is a "length direction of the battery" and a "length direction of the vehicle", and a direction where the arrow Z is located is a "width direction of the battery" and a "width direction of the vehicle". As shown by arrows in FIGS. 11, 17, 18, 19, and 20, a direction where the arrow a is located is a "length direction of the battery cell" and a "length direction of the first case wall", a direction where the arrow b is located is a "width direction of the battery cell" and a "width direction of the first case wall", and a direction where the arrow c is located is a "height direction of the battery cell".

In the description of the embodiments of the present disclosure, unless otherwise clearly specified and defined, technical terms "mounting", "connected", "connection", "fixation", and the like should be broadly understood. For example, they may be fixed connection, detachable connection or integrated connection, may be mechanical connection or electrical connection, or may be direct connection, indirect connection through an intermediate medium, internal communication between two components, or interaction relationship between two components. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects that have little or no interaction force, or contact between two objects that have interaction force.

The embodiments of the present disclosure are described in detail below.

A battery consists of different parts, such as a accommodation housing, a battery cell, a busbar, a sampling member, and a battery management system. Different types of parts are placed in the accommodation housing, which provides mounting positions for the different types of parts and protects and seals them, enabling the battery to be charged and discharged under different operating environments.

The sizes, shapes, and quantities of various different types of parts inside the accommodation housing are often different, while the space inside the accommodation housing is relatively regular for ease of manufacturing. Therefore, various parts cannot be placed in a regular manner in the accommodation housing, which easily leads to a waste of the volume of the accommodation housing, is not conducive to achieving a compact layout of the internal structure of the battery, and is also not conducive to improving the energy density of the battery.

The present disclosure aims to provide a battery. An accommodation portion is disposed in an accommodation housing and communicates with an accommodation cavity, so that some parts in the accommodation housing can be placed in the accommodation portion, thus the spatial shape in the accommodation housing can better adapt to the arrangement of various types of parts in the accommodation housing, thereby helping to reduce the three-dimensional sizes of the accommodation housing and improve a space utilization rate.

Specifically, an embodiment of the present disclosure provides a battery 10, referring to FIG. 2 to FIG. 9, including an accommodation housing 11 and a battery assembly 12.

The accommodation housing 11 provided with an accommodation cavity 111a, and the accommodation housing 11 includes a first housing wall 111.

The battery assembly 12 is accommodated in the accommodation cavity 111a, and the battery assembly 12 includes a protruding part 12a.

The first housing wall 111 is provided with an accommodation portion 111b, and at least part of the protruding part 12a is accommodated in the accommodation portion 111b.

The accommodation housing 11, which is a housing body forming the outer contour of the battery 10, is used to accommodate other parts in the battery 10 besides the accommodation housing 11, thereby providing a space for the mounting and fixing of other parts. At the same time, it plays a role in sealing and protecting, reducing the adverse effects on the normal operation of the battery 10 caused by collisions with external objects and the entry of foreign objects during transportation and use of the battery 10.

The housing wall refers to a structure between the various wall faces of the accommodation housing 11 that form the accommodation cavity 111a, respectively in a direction away from the accommodation cavity 111a up to the outer surface of the accommodation housing 11. In other words, in the two opposite surfaces of the housing wall, one surface forms the inner wall of the accommodation cavity 111a, and the other surface forms the outer surface of the accommodation cavity 111a.

The first housing wall 111 is a certain housing wall of the accommodation housing 11.

The battery assembly 12 refers to the various parts in the battery 10 used to enable the charging and discharging functions of the battery 10.

The battery assembly 12 is located inside the accommodation housing 11 so that the accommodation housing 11 can protect and seal the battery assembly 12, enabling the battery assembly 12 to perform normal charging and discharging functions.

The protruding part 12a refers to a part on the outer contour face formed by the battery assembly 12 that protrudes from other adjacent parts. The protruding part 12a can be one or more parts of the battery assembly 12, or can be part of a structure of a certain part in the battery assembly 12.

The accommodation portion 111b is the space formed on the surface of the first housing wall 111 facing the accommodation cavity 111a, and communicates with the space of the accommodation cavity 111a at least facing one side of the accommodation cavity 111a, so that part or all of the protruding part 12a can extend into the space of the accommodation portion 111b through the open position of the accommodation portion 111b.

The specific structural form of the accommodation portion 111b is not limited, for example, it can be a accommodation groove.

In the battery 10 of the embodiment of the present disclosure, the provision of the accommodation portion 111b on the first housing wall 111 facilitates a spatial shape in the accommodation housing 11 to better adapt to a shape of an outer contour formed by the battery assembly 12, thereby lowering the requirements on the arrangement of all parts in the battery assembly 12, and moreover, facilitates the reduction of an overall size and volume of the accommodation housing 11, enhances a space utilization rate in the accommodation housing 11, reduces an overall volume of the battery 10, and improves the energy density of the battery 10.

In some embodiments, referring to FIGS. 2 to 9, in a thickness direction of the first housing wall 111, a part of a projection of the battery assembly 12 is located outside a projection of the accommodation portion 111b.

The thickness direction of the first housing wall 111 is the direction of the first housing wall 111 away from the accommodation cavity 111a until the outer surface of the accommodation housing 11.

A part of the projection of the battery assembly 12 is located outside the projection of the accommodation portion 111b, that is, a part of the battery assembly 12 is located in the accommodation cavity 111a and the other part is located in the accommodation portion 111b.

This allows the battery assembly 12 to make fuller use of the space within the accommodation cavity 111a, improving the space utilization rate of the battery 10, facilitating increasing a capacity of the battery 10.

It can be understood that there is no limit to the specific number of first housing walls 111 provided on the accommodation housing 11, which may be one or more.

There is no limit to the number of accommodation portions 111b provided on the first housing wall 111, which may be one or more.

In some embodiments, referring to FIGS. 2 to 9, the battery assembly 12 further includes a plurality of battery cells 121, the battery cells 121 include a case 1211, the case 1211 has a first case wall 1212, and the protruding part 12a is disposed on the first case wall 1212.

The case 1211 is used to enclose a space for accommodating the relevant parts that realize electrochemical reactions in the battery cells 121.

The case wall refers to a structure between the respective wall faces enclosing the space in the case 1211 in a direction away from the enclosed space up to the outer surface of the case 1211 respectively.

The protruding part 12a is disposed on the first case wall 1212, which means that the protruding part 12a can be a part of the outer surface of the first case wall 1212 that protrudes from other parts of the first case wall 1212. That is, a part of the first case wall 1212 forms the protruding part 12a. The specific type of this part is not limited. For example, it can be part or all of a bulge 1214 formed on the outer surface of the first case wall 1212 as described below. It can also be other parts in the protruding part battery assembly 12 other than the battery cell 121, such as a busbar 122 and a sampling member 123 as described below. Part or all of these parts are located on the formed protruding part 12a and are disposed on the first case wall 1212. It can also be a combination of the above two situations. For example, the protruding part 12a includes the aforementioned bulge 1214, a terminal post 1213 provided on the bulge 1214 as described below, and the busbar 122 electrically connected to the terminal post 1213, etc.

In this way, a part of the first case wall 1212 can enter the accommodation portion 111b, which helps to increase the volume of the battery cell 121 and allows the space inside the accommodation housing 11 to adapt to battery cells 121 with different outer contour shapes. This helps to arrange the battery cells 121 with different outer contour shapes more compactly arranged in the accommodation housing 11, thereby improving the energy density of the battery 10.

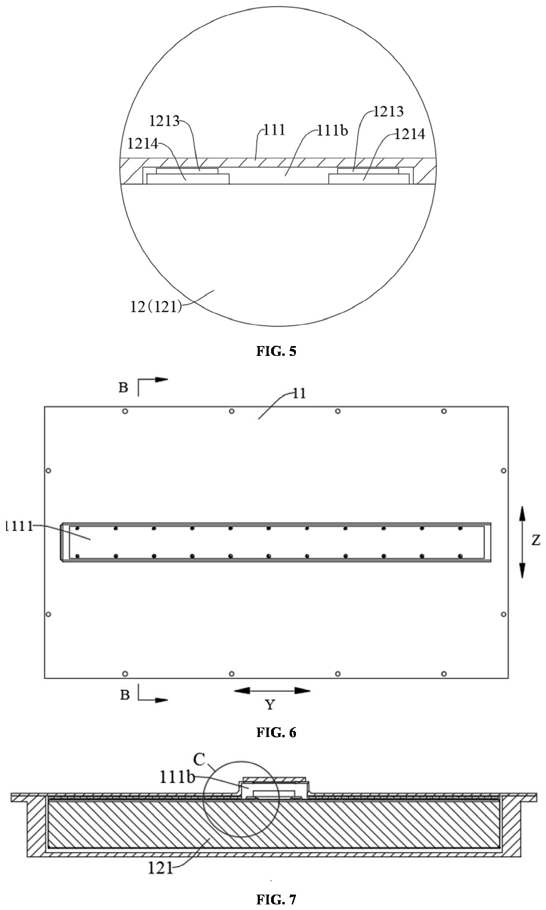

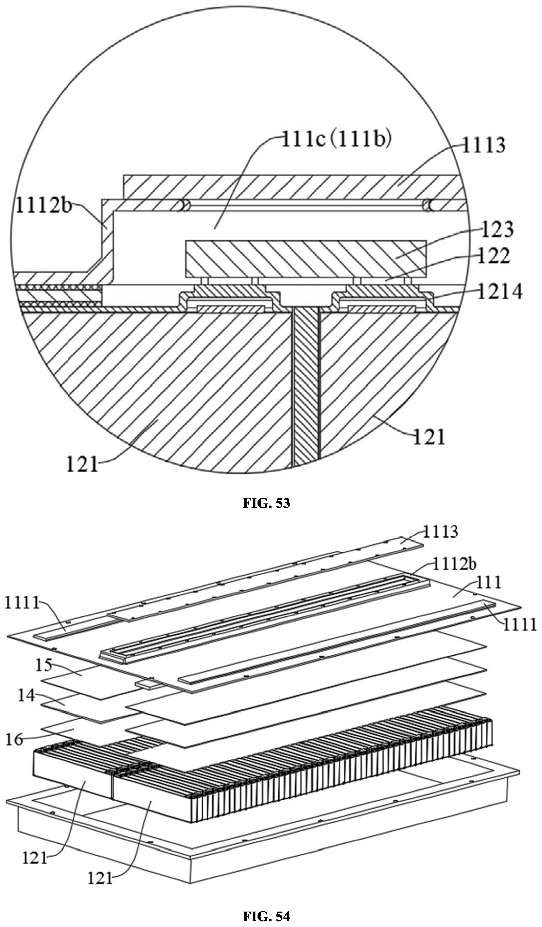

In some embodiments, referring to FIGS. 7, 8, 9, 10, 31, 33, 46, 47, 53, and 54, the battery assembly 12 further includes a busbar 122, each battery cell 121 further includes a terminal post 1213, the terminal posts 1213 are disposed on the first case wall 1212, the busbar 122 is electrically connected to the terminal posts 1213 of two battery cells 121, the protruding part 12a includes the busbar 122, and at least part of the busbar 122 is accommodated in the accommodation portion 111b.

The busbar 122 is used to electrically connect the plurality of battery cells 121 so that the battery cells 121 can be connected in series or in parallel.

The terminal post 1213 is disposed on the case 1211 in a penetrating mode and is used to be electrically connected to the parts that realize electrochemical reactions in the battery cells 121, so as to output or input electrical energy from or to the battery cells 121 through the terminal post 1213.

At least part of the busbar 122 is accommodated in the accommodation portion 111b, that is, part or all of the busbar 122 is located in the accommodation portion 111b.

This allows the spatial shape in the accommodation housing 11 to better adapt to the arrangement relationship between the busbar 122 and the battery cells 121, so that the shape of the accommodation cavity 111a can adapt to the shape of the battery cells 121. This helps to reduce the gap between the inner wall of the accommodation cavity 111a and the battery cells 121, and improve the space utilization rate of the battery 10.

It should be noted that the specific structure of the busbar 122 and the methods for realizing the series and parallel connection between battery cells 121 have been applied in the related art, and will not be elaborated here.

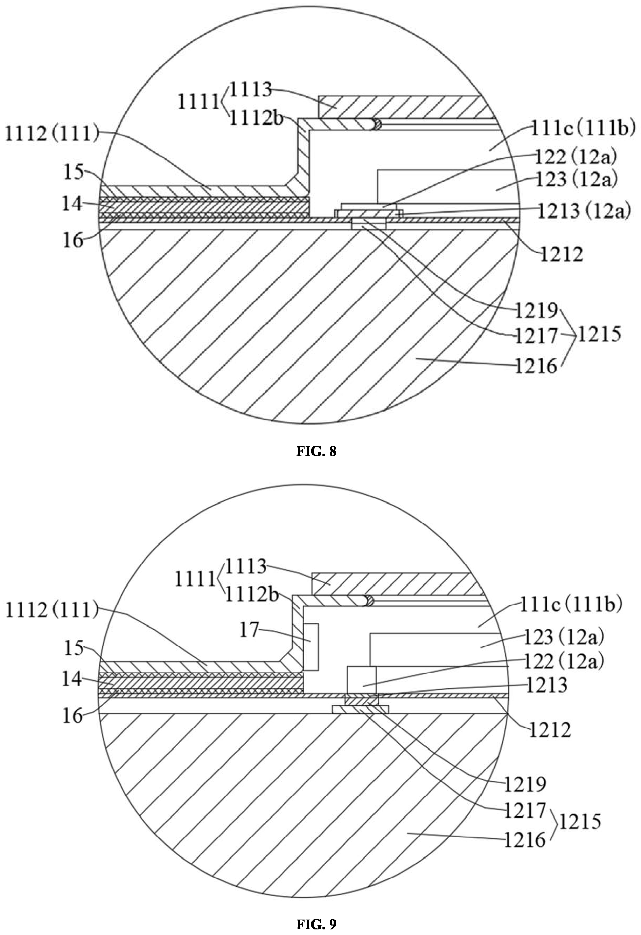

It is understandable that, referring to FIG. 9, the terminal post 1213 can be flush with the outer surface of the case 1211 so that the outer surface of the first case wall 1212 is a complete surface; or, referring to FIG. 8, the terminal post 1213 may protrude from the outer surface of the first case wall 1212.

It is understandable that the size of the case 1211 has a direct impact on the parts that realize electrochemical reactions within the battery cells 121, and thus affects the energy density of the battery cells 121.

In some embodiments, referring to FIGS. 7, 8, 31, 33, 53, and 54, at of least part of each terminal post 1213 is accommodated in the accommodation portion 111b.

That is, the protruding part 12a includes at least part of the terminal post 1213, and at least a part of each of the terminal post 1213 and the busbar 122 is located in the accommodation portion 111b. In this way, the busbar 122 connected to the terminal posts 1213 can be more rationally arranged in the accommodation portion 111b, which helps to improve the space utilization rate in the accommodation cavity 111a and thus helps to increase the capacity of the battery 10.

In some embodiments, the terminal post 1213 and the busbar 122 are both located in the accommodation portion 111b, while part or all of the case 1211 is located in the accommodation cavity 111a.

In some embodiments, referring to FIGS. 4, 5, 31, and 32, the terminal posts 1213 of at least two battery cells 121 are located in the same accommodation portion 111b.

This allows for the electrical connection of the terminal posts 1213 of different battery cells 121 in one accommodation portion 111b via the busbar 122, resulting in a more compact structure of the battery 10.

The busbar 122 is conductive in order to achieve electrical connection of the terminal posts 1213. During use and transportation of the battery 10, the battery assembly 12 may move relative to the accommodation housing 11, causing the busbar 122 to come into contact with the inner wall of the accommodation portion 111b, which may damage the busbar 122.

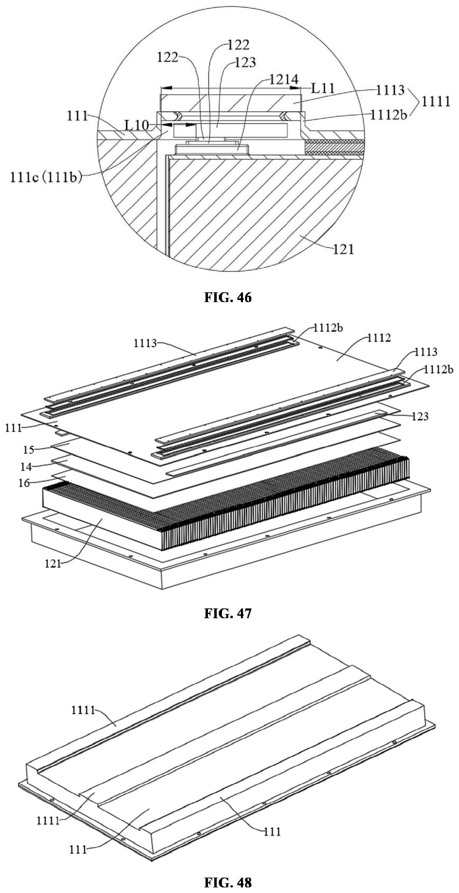

In some embodiments, referring to FIG. 46, spacing between an inner wall of the accommodation portion 111b and the busbar in a first direction is not less than 1% of a size of the accommodation portion 111b in the first direction, and the first direction is perpendicular to the thickness direction of the first housing wall. That is, L10≥0.01·L11.

This helps to reduce the probability of the busbar 122 coming into contact with the inner wall of the accommodation portion 111b, allowing the battery assembly 12 to function normally.

The first direction can be any direction perpendicular to the thickness direction of the first housing wall, such as the length direction of the battery 10 and the width direction of the battery 10.

In some embodiments, a ratio of spacing between an inner wall of the accommodation portion and the busbar in a first direction to a size of the accommodation portion in the first direction ranges from 2% to 10%. That is, 0.1·L11≥L10≥0.02·L11.

This further helps to reduce the probability of the busbar 122 coming into contact with the inner wall of the accommodation portion 111b.

In some embodiments, referring to FIG. 9, the battery 10 includes an insulator 17, and the insulator 17 is disposed on the inner wall of the accommodation portion 111b.

In this way, by utilizing the insulating property of the insulator 17, the risk of contact between the battery assembly 12 and the inner wall of the accommodation portion 111b can be reduced, thereby reducing the risk of charge transfer between the battery assembly 12 and the accommodation housing 11 and lowering the risk of short circuits and other problems during use of the battery 10.

The specific material of the insulator 17 is not limited, such as rubber.

In some embodiments, referring to FIG. 9, the battery assembly 12 includes a battery cell 121, the battery cell includes a terminal post 1213, and the insulator 17 is disposed opposite to the terminal post 1213.

This reduces the probability of the terminal post 1213 coming into contact with the accommodation housing 11 due to relative movement between the battery assembly 12 and the accommodation portion 111b, thus reducing the risk of a short circuit in the battery cell 121 caused by contact between the terminal post 1213 and the accommodation housing 11.

In some embodiments, referring to FIGS. 7, 8, 31, 33, 46, 53, and 54, the first case wall 1212 includes a bulge 1214, the protruding part 12a includes the bulge 1214, and at least part of the bulge 1214 is accommodated in the accommodation portion 111b. In other words, part or all of the bulge 1214, that is, a part of the first case wall 1212, is located in the accommodation portion 111b.

By disposing the bulge 1214, it is beneficial to increasing the space inside the battery cell 121, to increasing the volume inside the battery cell 121 for accommodating the parts that carry out electrochemical reactions, and to increasing the energy density of the battery cell 121.

Thus, the bulge 1214 is located in the accommodation portion 111b, it is beneficial to reducing spacing between other parts of the first case wall 1212 and the inner wall of the accommodation cavity 111a, which is beneficial to reducing the volume of the accommodation cavity 111a, and in turn, to reducing three-dimensional sizes of the accommodation housing 11, reducing the overall volume of the battery 10, and facilitating the improvement of the energy density and space utilization rate of the battery 10.

In some embodiments, the bulge 1214 forms the protruding part 12a separately, that is, the protruding part 12a protrudes from a body of the first case wall.

In some embodiments, referring to FIGS. 11 to 16, and 31, the bulge 1214 is provided with the terminal post 1213. In other words, the terminal post 1213 penetrates into the bulge 1214.

This helps to improve the space utilization rate in the bulge 1214, and reduces a redundant volume in the case 1211, making the space in the battery cell 121 more compact. This, in turn, helps to reduce the overall volume and outer contour size of the battery cell 121, thereby increasing the number of battery cells 121 that can be accommodated in the battery 10, and improving the energy density and space utilization rate of the battery 10.

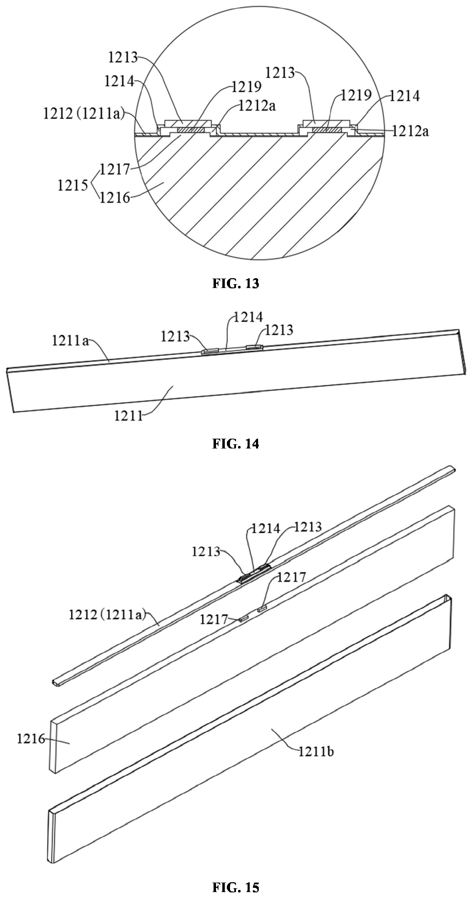

In some embodiments, referring to FIGS. 14 to 16, the number of the terminal posts 1213 is two, polarities of the terminal posts 1213 are opposite, and the two terminal posts 1213 are disposed on the same bulge 1214.

One terminal post 1213 serves as the positive electrode of the battery cell 121, and the other terminal post 1213 serves as the negative electrode of the battery cell 121.

This allows for the provision of mounting positions for the two terminal posts 1213 with only one bulge 1214 manufactured, which helps to reduce manufacturing steps for the first case wall 1212, and lower production costs.

In some embodiments, referring to FIGS. 11 to 13, the number of the terminal posts 1213 is two, polarities of the terminal posts 1213 are opposite, and the two terminal posts 1213 are respectively disposed on two bulges 1214.

In this way, on the one hand, it helps to reduce the volume of a single bulge 1214, making the structure more compact and thus reducing the size of the battery 10; and on the other hand, it helps to separate the two terminal posts 1213, reducing the risk of short circuits between the two terminal posts 1213 due to a connection and improving the use safety of the battery cell 121.

It is understandable that the bulge 1214 protrudes from the surface of the first case wall 1212. Therefore, the arrangement position of the bulge 1214 will affect the arrangement of other parts in the battery 10, except for the battery cell 121.

In some embodiments, referring to FIG. 17, the two terminal posts 1213 are spaced apart in a length direction of the first case wall 1212.

The length direction of the first case wall 1212 refers to the direction in which the largest size of the three-dimensional sizes of the outer contour of the first case wall 1212 extends when the outer contour shape of the first case wall 1212 is a cuboid.

This makes the spacing between the two bulges 1214 as large as possible, allowing a part of the first case wall 1212 between the two bulges 1214 to form a larger-area flat region. This facilitates the arrangement of other parts, in the battery 10, with larger outer contour sizes in this region under a condition of a certain volume in the battery 10, providing convenience for the arrangement of other parts in the battery 10. At the same time, it is conducive to reducing the volume of the battery 10, improving the space utilization rate in the battery 10, and making the volume of the battery 10 more compact.

In some embodiments, referring to FIG. 18, the two terminal posts 1213 are spaced apart in a width direction of the first case wall 1212.

The width direction of the first case wall 1212 refers to the direction, perpendicular to the length direction, of the three-dimensional sizes of the outer contour of the first case wall 1212 when the outer contour shape of the first case wall 1212 is a cuboid.

It is understandable that the size of the first case wall 1212 in its width direction is smaller than its size in its length direction. The battery 10 has a plurality of battery cells 121. The arrangement of the plurality of battery cells 121 in the width direction is conducive to reducing the maximum size of the outer contour formed by the plurality of battery cells 121.

In this way, the two terminal posts 1213 are disposed in the width direction of the first case wall 1212, which helps to shorten the distance between terminal posts 1213 of different polarities between two adjacent battery cells 121, thereby helping to reduce the size of the busbar 122 and thus reduce the size of the battery 10.

In some embodiments, referring to FIGS. 11 to 16, the battery cell 121 further includes an electrode assembly 1215, the electrode assembly 1215 is accommodated in the case 1211, a part of the first case wall 1212 is concave to form an avoidance groove 1212a, the avoidance groove 1212a is located on a side of the bulge 1214 close to the electrode assembly 1215, and a part of the electrode assembly 1215 is located in the avoidance groove 1212a.

The case 1211 provides a mounting space for the electrode assembly 1215 and serves as a protection. At the same time, the case 1211 is used for the movement of the electrolyte so that an electrochemical reaction can occur between the electrolyte and the electrode assembly 1215.

The first case wall 1212 is provided with an avoidance region. The avoidance region is concave on the side facing the electrode assembly 1215 to form the avoidance groove 1212a, and protrudes on the side away from the electrode assembly 1215 to form the bulge 1214. The bulge 1214 is correspondingly disposed with the avoidance groove 1212a.

A part of the electrode assembly 1215 is located in the avoidance groove 1212a, thus facilitating that the first case wall 1212 can be as close as possible to the electrode assembly 1215 under a condition of a certain size of the first case wall 1212, so that as much part of the electrode assembly 1215 can extend into the avoidance groove 1212a as possible while the volume in the case 1211 can be effectively reduced, which is conducive to the reduction of the redundant volume in the battery cell 121, making the space in the battery cell 121 more compact. This, in turn, helps to reduce the overall volume and outer contour size of the battery cell 121, thereby increasing the number of battery cells 121 that can be accommodated in the battery 10, and improving the energy density and space utilization rate of the battery 10.

It is understandable that at least part of a mounting cavity for placing the electrode assembly 1215 is disposed in the battery cell 121, and the mounting cavity communicates with the avoidance groove 1212a.

In some embodiments, referring to FIGS. 11 to 16, the electrode assembly 1215 includes a main body 1216 and a tab 1217, the tab 1217 is disposed on an edge of one side of the main body 1216 and is electrically connected to the main body 1216, and at least part of the tab 1217 is located in the avoidance groove 1212a.

The main body 1216, namely a bare cell, is formed by stacking or winding a plurality of electrode pieces. The tab 1217 forms the positive or negative electrode in the electrode assembly 1215.

Part or all of the tab 1217 is located in the avoidance groove 1212a, which helps to improve the space utilization rate of the space in the accommodation housing 11.

Understandably, the tab 1217 protrudes from the surface of one side of the main body 1216.

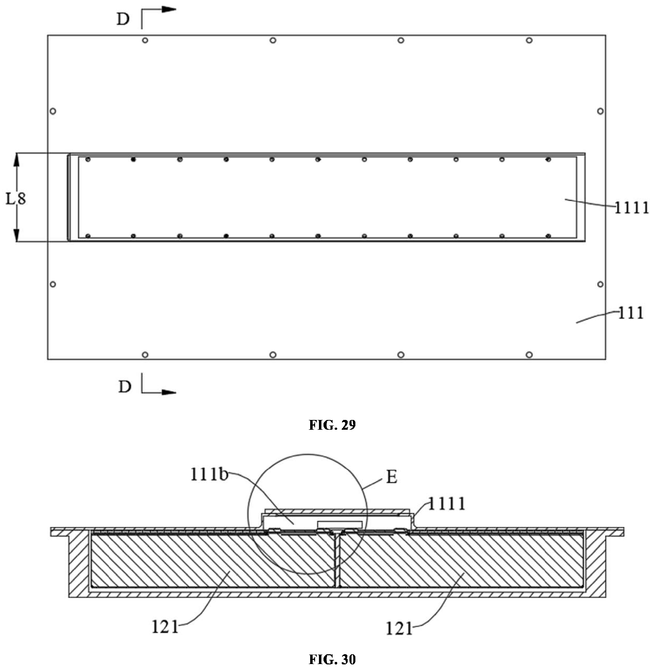

In some embodiments, referring to FIGS. 29 to 31, at least part of the tab 1217 is located in the accommodation portion 111b, which helps to improve the space utilization rate of the space in the accommodation housing 11 and make the part of the battery cell 121 located outside the accommodation portion 111b more regular in shape.

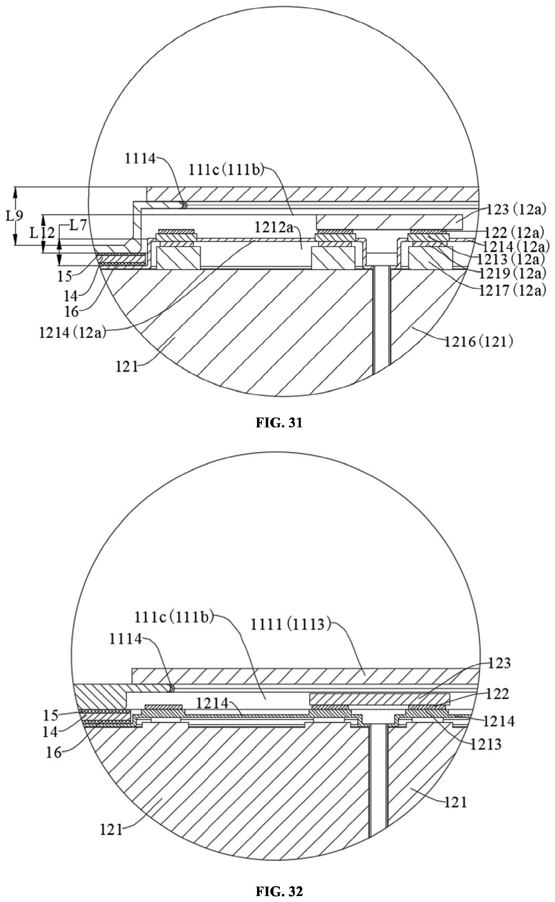

In some embodiments where the terminal post 1213 is provided, referring to FIG. 31, the electrode assembly 1215 further includes an adapter piece 1219, the tab 1217 is electrically connected to the terminal post 1213 through the adapter piece 1219, and at least part of the adapter piece 1219 is located in the accommodation portion 111b.

The adapter piece 1219 is used to electrically connect the terminal post 1213 and the tab 1217 to meet the electrical connection requirements between terminal posts 1213 and tabs 1217 of different sizes and specifications.

Thus, a part or all of the adapter piece 1219 is located in the accommodation portion 111b, which can improve the space utilization rate of the space in the accommodation housing 11 and helps to make the part of the battery cell 121 located outside the accommodation portion 111b more regular in shape.

In some embodiments, a part of the main body 1216 is located in the avoidance groove 1212a.

This allows for the adaptation to different shapes of tabs 1217 and main bodies 1216 in different shapes, given a fixed total volume and shape of the battery cell 121, thereby improving the space utilization rate in the avoidance groove 1212a.

In some embodiments, referring to FIGS. 12 and 15, the case 1211 includes a cover plate 1211a and a case body 1211b, the cover plate 1211a covers an opening of the case body 1211b, and the bulge 1214 is disposed on the cover plate 1211a.

The cover plate 1211a covers the opening of the case body 1211b and is in sealed connection to the case body 1211b to encapsulate the electrode assembly 1215 and the electrolyte in the mounting cavity, preventing the electrolyte from overflowing or preventing foreign objects from entering the mounting cavity and contaminating the electrolyte, so that the electrochemical reaction of the battery cell 121 can proceed normally during charging and discharging.

The specific method of the sealed connection between the cover plate 1211a and the case body 1211b is not limited, such as welding.

Thus, by disposing the bulge 1214 on the cover plate 1211a, it is beneficial to allowing a part of the electrode assembly 1215 to directly enter or exit the space of the bulge 1214 during the process of mounting or removing the cover plate 1211a, thereby improving the mounting and removal efficiency of the battery cell 121.

It is understandable that the open direction of the case body 1211b is the same as the covering direction of the cover plate 1211a.

In some embodiments, the bulge 1214 is disposed on the case body 1211b.

Thus, during the assembly of the battery cell 121, a part of the electrode assembly 1215 can be placed into the space of the bulge 1214 first, and a stop fit is achieved on the electrode assembly 1215 through the bulge 1214, reducing the probability that the electrode assembly 1215 moves and fails to function during the process of removing and mounting the cover plate 1211a.

In some embodiments, referring to FIGS. 11 to 13, the number of the bulges 1214 on the first case wall 1212 is two. In this way, it is convenient for each bulge 1214 to be correspondingly electrically connected to the terminal post 1213 of the same polarity as well as an electrode piece, which helps to reduce the possibility of a short circuit.

In some embodiments, referring to FIG. 17, each of the two bulges 1214 is located at one end of two opposite ends of the first case wall 1212.

This allows a part of the first case wall 1212 between the two bulges 1214 to form a larger-area flat region, thus facilitates the arrangement of other parts, in the battery 10, with larger outer contour sizes in this region under a condition of a certain volume in the battery 10, providing convenience for the arrangement of other parts in the battery 10. At the same time, it is conducive to reducing the volume of the battery 10, improving the space utilization rate in the battery 10, and making the volume of the battery 10 more compact.

In some embodiments, referring to FIGS. 18 and 19, a distance between the bulge 1214 and one end of the first case wall 1212 in the length direction is greater than a distance between the bulge 1214 and the other end of the first case wall 1212 in the length direction.

In other words, the first case wall 1212 is divided into two regions in the its length direction by the bulge 1214, and the area of one region is larger than that of the other region. Thus, it facilitates the arrangement of other parts, in the battery 10, with larger outer contour sizes in the larger-area region under a condition of a certain volume in the battery 10, providing convenience for the arrangement of other parts in the battery 10. At the same time, it is conducive to reducing the volume of the battery 10, improving the space utilization rate in the battery 10, and making the volume of the battery 10 more compact.

In some embodiments, referring to FIG. 19, the bulge 1214 is located at one end of the first case wall 1212 in the length direction of the first case wall 1212.

In this way, it is possible to maximize the area of the region of the first case wall 1212 located at the other end away from the bulge 1214 in the length direction of the first case wall 1212, thus facilitating the arrangement of other parts, in the battery 10, with larger outer contour sizes in this region, providing convenience for the arrangement of other parts in the battery 10. At the same time, it is conducive to reducing the volume of the battery 10, improving the space utilization rate in the battery 10, and making the volume of the battery 10 more compact.

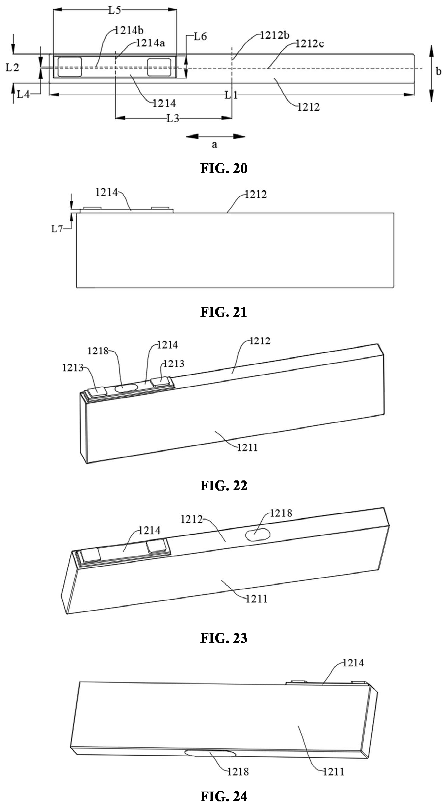

In some embodiments, referring to FIGS. 14 and 20, the bulge 1214 is located in a central position of the first case wall 1212 in the length direction of the first case wall 1212.

In other words, a first central plane 1212b of the first case wall 1212 in its length direction coincides with a third central plane 1214a of the bulge 1214 in the length direction of the battery cell 121.

The first central plane 1212b refers to a reference plane that is perpendicular to the length direction of the first case wall 1212 and located in a position half the size of the first case wall 1212 in its length direction.

The third central plane 1214a refers to a reference plane that is perpendicular to the length direction of the bulge 1214 and located in a position half the size of the bulge 1214 in its length direction.

This allows the structure of the battery cell 121 to be symmetrical about the first central plane 1212b, so as to facilitate the adjustment of the placement direction when the plurality of battery cells 121 are arranged in the battery 10, thereby improving the adaptability of the battery cells 121.

It should be noted that, due to the influence of many factors in the manufacturing, processing, assembly, measurement and other production chains, the first central plane 1212b of the first case wall 1212 in its length direction and the third central plane 1214a of the bulge 1214 in the length direction of the battery cell 121 cannot be consistent with design sizes to achieve coincidence after the battery cell 121 is manufactured. Therefore, the actual measurement of whether the first central plane 1212b and the third central plane 1214a coincide is for coincidence that considers an error of a certain preset range. In other words, if the spacing between the first central plane 1212b and the third central plane 1214a in the length direction of the first case wall 1212 is within a preset range, they can be considered to coincide. The specific value for the preset range is determined according to the design requirements.

In some embodiments, referring to FIG. 20, spacing between a central position of the first case wall 1212 in the length direction thereof and a central position of the bulge 1214 in the length direction of the first case wall 1212 is first spacing, and a ratio of the first spacing to a length size of the first case wall 1212 is greater than 0 and does not exceed 47.5%.

The length size of the first case wall 1212 is a size value of L1 in FIG. 20. The first spacing is a size value of L3 in FIG. 20. That is, 0<L3/L1≤47.5%.

In this way, it is beneficial to making the first case wall 1212 to form a larger-area flat region in the length direction of the first case wall 1212, thus facilitating the arrangement of other parts, in the battery 10, with larger outer contour sizes in this region, providing convenience for the arrangement of other parts in the battery 10.

The ratio of the first spacing to the length size of the first case wall 1212 is not limited to any specific value, such as 0.5%, 6%, 10%, 15%, 20%, 25%, 30%, and 47.5%.

The specific method for measuring the length size of the first case wall 1212 is not limited. For example, the size between end faces of the two ends of the battery cell 121 in the length direction is measured by using a vernier caliper or a ruler.

The specific method for measuring the length size of the bulge 1214 is not limited. For example, the size between end faces of the two ends of the bulge 1214 in the length direction is measured by using a vernier caliper or a ruler.

The specific method for measuring the first spacing is not limited. For example, the size between the two ends of the first case wall 1212 in the length direction and the size between the two ends of the bulge 1214 in the length direction can be measured by using a vernier caliper or a ruler. The positions of the first central plane 1212b and the second central plane 1212c are calculated, and the first central plane 1212b and the second central plane 1212c are marked respectively. The first case wall 1212 is placed on a projector, and projected images of two marks are aligned with a scale of the projector to obtain the size of the first spacing.

In some embodiments, the ratio of the first spacing to the length size of the first case wall 1212 ranges from 40% to 47.5%. In this way, it is further beneficial to making the bulge 1214 to form a larger-area flat region along two sides or one side of the length direction of the first case wall 1212, thus facilitating the arrangement of other parts, in the battery 10, with larger outer contour sizes in this region.

The ratio of the first spacing to the length size of the first case wall 1212 is not limited to any specific value, such as 40%, 42.5%, 45%, and 47.5%.

In some embodiments, a central position of the first case wall 1212 in the width direction thereof coincides with a central position of the bulge 1214 in the width direction of the first case wall 1212. In other words, the second central plane 1212c of the first case wall 1212 in its width direction coincides with a fourth central plane 1214b of the bulge 1214 in the width direction of the first case wall 1212.

Referring to FIG. 20, the second central plane 1212c refers to a reference plane that is perpendicular to the width direction of the first case wall 1212 and located in a position half the size of the first case wall 1212 in its width direction. The fourth central plane 1214b refers to a reference plane that is perpendicular to the width direction of the first case wall 1212 and located in a position half the size of the bulge 1214 in its width direction.

In this way, it is further beneficial to forming a larger-area flat region in the width direction of the first case wall 1212, thus facilitating the arrangement of other parts, in the battery 10, with larger outer contour sizes in this region.

It should be noted that, due to the influence of many factors in the manufacturing, processing, assembly, measurement and other production chains, the second central plane 1212c and the fourth central plane 1214b cannot be consistent with design sizes to achieve coincidence after the battery cell 121 is manufactured. Therefore, the actual measurement of whether the second central plane 1212c and the fourth central plane 1214b coincide is for coincidence that considers an error of a certain preset range. In other words, if the spacing between the second central plane 1212c and the fourth central plane 1214b in the width direction of the first case wall 1212 is within a preset range, they can be considered to coincide. The specific value for the preset range is determined according to the design requirements.

In some embodiments, referring to FIG. 20, spacing between a central position of the first case wall 1212 in the width direction thereof and a central position of the bulge 1214 in the width direction of the first case wall 1212 is second spacing, and a ratio of the second spacing to a width size of the first case wall 1212 is greater than 0 and does not exceed 25%.

The width size of the first case wall 1212 is a size value of L2 in FIG. 20. The second spacing is a size value of L4 in FIG. 20. That is, 0<L4/L2≤25%.

This allows for certain redundancy in the size of the bulge 1214 in the width direction, facilitating sealing between the first case wall 1212 and other parts.

The ratio of the second spacing to the width size of the first case wall 1212 is not limited to any specific value, such as 1%, 5%, 10%, 15%, 20%, and 25%.

The specific method for measuring the width size of the battery cell 121 is not limited. For example, the size between end faces of the two ends of the first case wall 1212 in the width direction is measured by using a vernier caliper or a ruler.

The specific method for measuring the width size of the bulge 1214 is not limited. For example, the size between end faces of the two ends of the bulge 1214 in the width direction is measured by using a vernier caliper or a ruler.

The specific method for measuring the second spacing is not limited. For example, the size between the two ends of the first case wall 1212 in the width direction and the size between the two ends of the bulge 1214 in the width direction are respectively measured by using a vernier caliper or a ruler. The positions of the third central plane 1214a and the fourth central plane 1214b are calculated, and the third central plane 1214a and the fourth central plane 1214b are marked respectively. The battery cell 121 is placed on a projector, and projected images of two marks are aligned with a scale of the projector to obtain the size of the second spacing.

In some embodiments, a length size of the battery cell 121 is not less than 350 mm (millimeter), which is beneficial to an electrochemical reaction of the electrode assembly 1215 and an electrolyte in the battery cell 121 to store or release sufficient electrical energy, and beneficial to the total electrical energy in the battery 10 to meet the demands.

The length size of the battery cell 121 is not limited to any specific value, such as 400 mm, 500 mm, 600 mm, 700 mm, 800 mm, 900 mm, 1000 mm, 1200 mm, and 1500 mm.

In some embodiments, a width size of the battery cell 121 ranges from 5 mm to 50 mm, which makes the battery cell 121 easy to carry in the size and better adapt to accommodation housings 11 of different sizes.

The size of the battery cell 121 in the width direction is not limited to any specific value, such as 5 mm, 20 mm, 30 mm, 35 mm, 40 mm, and 50 mm.

In some embodiments, a height size of the battery cell 121 ranges from 80 mm to 200 mm. This makes the battery cell 121 easy to carry in the size and better adapt to accommodation housings 11 of different sizes.

The size of the battery cell 121 in the height direction is not limited to any specific value, such as 80 mm, 100 mm, 120 mm, 150 mm, 180 mm, and 200 mm.

In some embodiments, a length direction of the bulge 1214 is the same as that of the first case wall 1212, and a ratio of a length size of the bulge 1214 to the length size of the first case wall 1212 ranges from 2.5% to 97.5%. In other words, referring to FIG. 20, 2.5%≤L5/L1<97.5%.

This is beneficial to making the space in the bulge 1214 to meet the requirement of accommodating a part of the electrode assembly 1215.

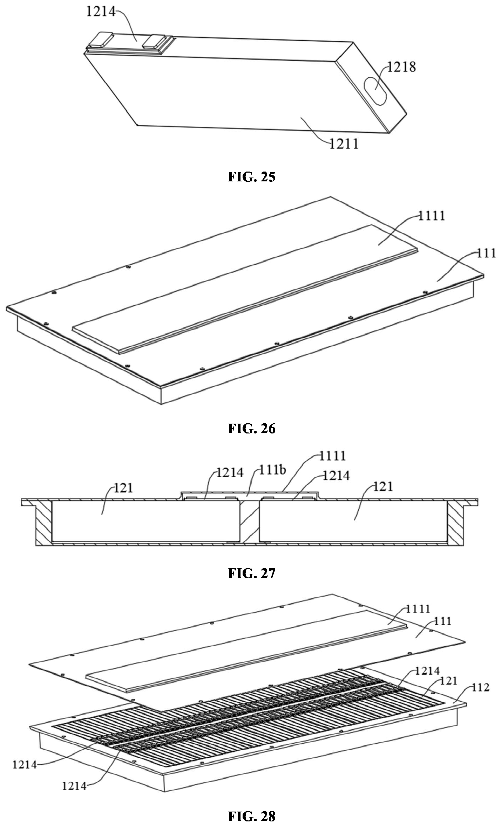

In some embodiments, a width direction of the bulge 1214 is the same as that of the first case wall 1212, and a ratio of a width size of the bulge 1214 to the width size of the first case wall 1212 ranges from 25% to 100%. In other words, referring to FIG. 20, 25%≤L6/L2<100%.

This is beneficial to making the space in the bulge 1214 to meet the requirement of accommodating a part of the electrode assembly 1215.

In some embodiments, the height size of the bulge 1214 does not exceed 45 mm, that is, referring to FIG. 21, L7≤45 mm. This is beneficial to making the space in the bulge 1214 to meet the requirement of accommodating a part of the electrode assembly 1215.

In some embodiments, a length direction of the bulge 1214 is the same as that of the first case wall 1212, and a ratio of a length size of the bulge 1214 to the length size of the first case wall 1212 ranges from 5% to 40%. That is, referring to FIG. 20, 5%≤L5/L1≤40%.

This is more beneficial to making the space in the bulge 1214 to meet the requirement of accommodating a part of the electrode assembly 1215.

The ratio of the size of the bulge 1214 in the length direction of the first case wall 1212 to the length size of the first case wall 1212 is not limited to any specific value, such as 5%, 10%, 15%, 20%, 25%, 30%, 35%, and 40%.

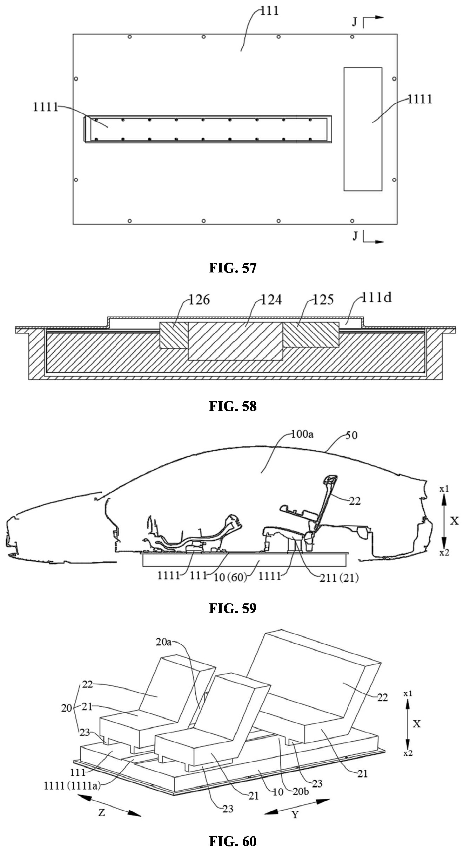

In some embodiments, a width direction of the bulge 1214 is the same as that of the first case wall 1212, and a ratio of a width size of the bulge 1214 to the width size of the first case wall 1212 ranges from 60% to 90%. That is, referring to FIG. 20, 60%≤L6/L2≤90%.

This is more beneficial to making the space in the bulge 1214 to meet the requirement of accommodating a part of the electrode assembly 1215.

The ratio of the size of the bulge 1214 in the width direction of the first case wall 1212 to the width size of the first case wall 1212 is not limited to any specific value, such as 60%, 70%, 80%, and 90%.

In some embodiments, a height size of the bulge 1214 ranges from 2 mm to 10 mm. In other words, referring to FIG. 21, 2mm≤L7≤10mm.

The height of the bulge 1214 refers to the size of the bulge 1214 in the height direction of the battery cell 121.

This is further beneficial to making the space in the bulge 1214 to meet the requirement of accommodating a part of the electrode assembly 1215.

The height size of the bulge 1214 is not limited to any specific value, such as 2 mm, 3 mm, 4 mm, 5 mm, 6 mm, 7 mm, 8 mm, 9 mm, and 10 mm.

In some embodiments, the battery cell 121 includes an explosion-proof valve 1218. The explosion-proof valve 1218 is used to be turned on under triggering by a pressure inside the battery cell 121 after a thermal runaway occurs inside the battery cell 121, so that a gas and/or liquid inside the battery cell 121 is discharged from the battery cell 121 under the pressure, thereby reducing the probability of the battery cell 121 exploding.

In some embodiments, referring to FIG. 22, the explosion-proof valve 1218 is located on the bulge 1214. This is beneficial to improving the space utilization rate of the space in the bulge 1214, making the space in the battery cell 121 more compact and thus reducing the total volume and outer contour size of the battery cell 121.

In some embodiments, referring to FIG. 23, the explosion-proof valve 1218 and the bulge 1214 are located on the first case wall 1212, and the explosion-proof valve 1218 is spaced apart from the bulge 1214. This is beneficial to reducing the volume of the bulge 1214 and can take advantage of a larger arrangement region on the first case wall 1212. On one hand, it facilitates the arrangement of the explosion-proof valve 1218 with a larger opening flow rate, further reducing the probability of the battery cell 121 exploding. On the other hand, it allows a spray direction of high-temperature gas flow, after the explosion-proof valve 1218 is turned on, to adapt to the arrangement of the battery cells 121 in the battery 10, improving the use safety of the battery 10.

In some embodiments, referring to FIG. 24, the explosion-proof valve 1218 is located on a wall face in an outer surface of the battery cell 121 facing away from the first case wall 1212. That is, the spray direction of the high-temperature gas flow sprayed out from the explosion-proof valve 1218 is a direction away from the bulge 1214. This helps to make the sprayed high-temperature gas flow away from other parts in the battery 10 that are electrically connected to the bulge 1214, thereby reducing the impact of the high-temperature gas flow on other battery cells 121 and other parts, reducing the probability of a chain reaction of a thermal runaway in the battery 10, and improving the use safety of the battery 10.

In some embodiments, referring to FIG. 25, the explosion-proof valve 1218 is located on a wall face in the outer surface of the battery cell 121 adjacent to the first case wall 1212. Thus, the spray direction of the high-temperature gas flow sprayed from the explosion-proof valve 1218 is away from other parts in the battery 10 that are electrically connected to the bulge 1214, thereby reducing the impact of the high-temperature gas flow on other battery cells 121 and other parts, reducing the probability of a chain reaction of q thermal runaway in the battery 10, and improving the use safety of the battery 10.

The specific arrangement relationship between the bulge 1214 of the battery cell 121 and the accommodation portion 111b is not limited.

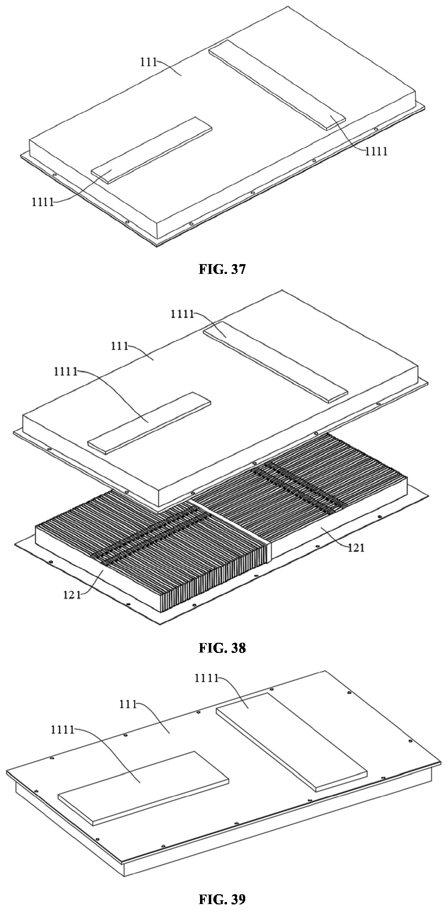

In some embodiments, referring to FIGS. 2 to 5, 37, and 38, one battery cell 121 includes a plurality of bulges 1214, and the plurality of bulges 1214 are located in the same accommodation portion 111b.

This helps to reduce the number of bosses 1111, thereby reducing manufacturing steps for the bulge 1214, lowering production costs, reducing the difficulty of mutual coordination and assembly of the bulge 1214 and the accommodation portion 111b during assembly of the battery 10, and improving the efficiency of manufacturing operations.

In some embodiments, referring to FIGS. 26 to 28, the bulges 1214 of the plurality of battery cells 121 are located in the same accommodation portion 111b.

This helps to further reduce the number of bosses 1111, thereby lowering production costs, reducing the difficulty of mutual coordination and assembly of the bosses 1111 and the accommodation portion 111b during assembly of the battery 10, and improving the efficiency of manufacturing operations. At the same time, it facilitates the arrangement of the sampling member 123, the busbar 122, and other parts in the same accommodation portion 111b to electrically connect the battery cells 121 and acquire various information of the battery cells 121.

In some embodiments, referring to FIGS. 28 to 30, FIGS. 33 to 36, FIGS. 39 and FIG. 40, a plurality of battery cells 121 are included in the battery 10, the plurality of battery cells 121 are divided into a plurality of groups, each group includes at least two battery cells 121, and the bulges 1214 of the battery cells 121 in each group are located in the same accommodation portion 111b.

In this way, electrical connections are achieved between the respective battery cells 121 in the same group through the same accommodation portion 111b.

Understandably, the respective battery cells 121 in each group can be spaced apart or attached to each other to improve a space utilization rate.

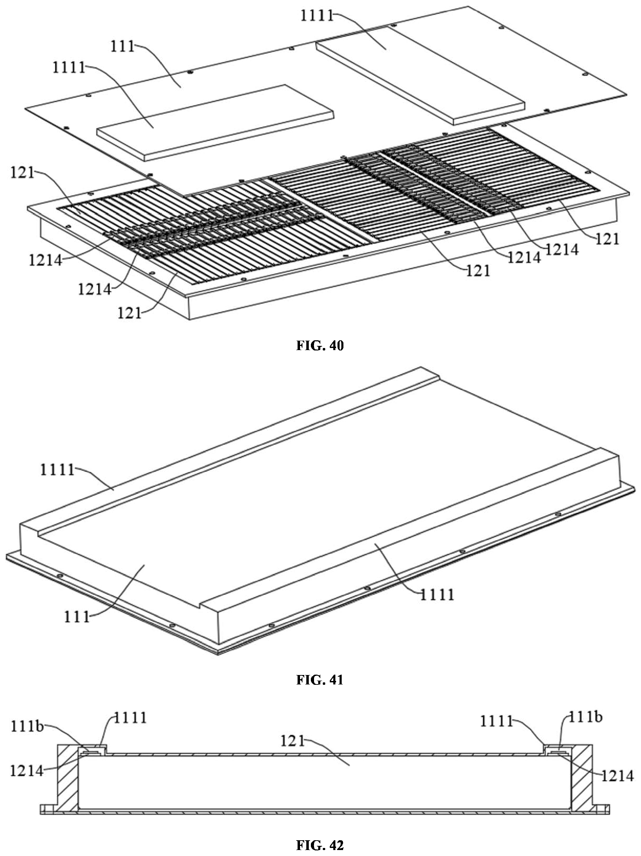

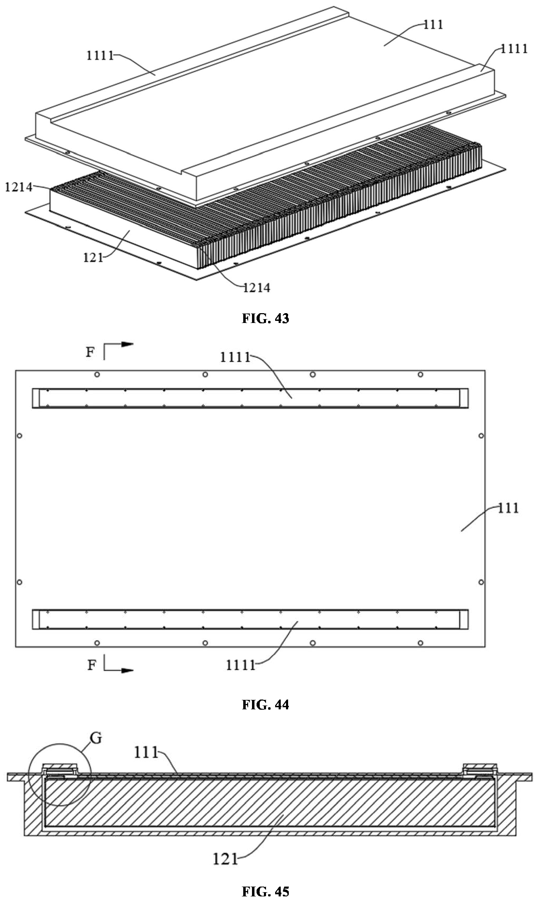

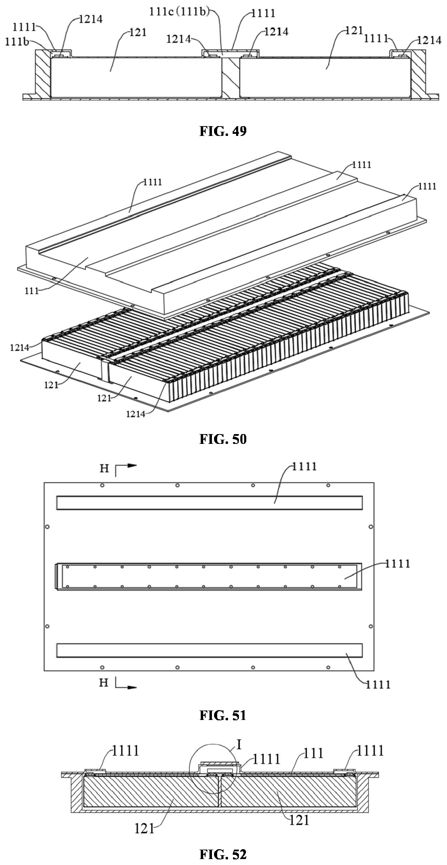

In some embodiments, referring to FIGS. 41 to 54, one battery cell 121 includes a plurality of bulges 1214, the first housing wall 111 includes a plurality of accommodation portions 111b, and the respective bulges 1214 in one single battery cell 121 are respectively located in the different accommodation portions 111b.

In other words, different bulges 1214 on the single battery cell 121 are separated from each other by different accommodation portions 111b.

This reduces the probability of short circuits caused by electrical connection due to accidental contact and other reasons between components such as the terminal post 1213 disposed on the bulge 1214, thus improving the use safety of the battery 10.

In some embodiments, referring to FIGS. 48 to 54, the plurality of battery cells 121 are arranged in the first direction, one battery cell 121 includes a plurality of bulges 1214, and at least part of the bulges 1214 is located at one end of the battery cell 121 in the first direction; and in two battery cells 121 adjacent to each other in the first direction, the bulges 1214 on the two battery cells 121, located at one ends close to each other in the first direction, are located in the same accommodation portion 111b.

The specific direction of the first direction is not limited and may be the length direction of the battery 10, the width direction of the battery 10, etc.

This helps to reduce the spacing between the bulges 1214 of adjacent battery cells 121, reduces the difficulty of achieving electrical connection between components such as the terminal posts 1213 on the bulges 1214, and facilitates the electrical connection between adjacent battery cells 121.

In some embodiments, referring to FIGS. 7, 8, 9, 31, 33, 46, 47, 53, and 54, the battery assembly 12 further includes a sampling member 123, and at least part of the sampling member 123 is accommodated in the accommodation portion 111b. That is, the part of the protruding part 12a located in the accommodation portion 111b includes a part of the sampling member 123.

The sampling member 123 is used to acquire parameter information such as voltage and temperature of various parts inside the battery 10, such as battery cells 121, and transmit the acquired parameter information to a battery management system (BMS) 124 so that the battery management system 124 can reasonably implement different control strategies to enable the battery 10 to be charged and discharged safely and efficiently.

The protruding part 12a includes at least part of the sampling member 123, that is, some or all of the sampling member 123 is located in the accommodation portion 111b.

This allows the shape of the accommodation cavity 111a to better adapt to the shape of the case 1211 of the battery cell 121, and under the premise that the volume of the accommodation cavity 111a is fixed, it is beneficial to increasing the volume of the case 1211, thereby increasing the energy density of the battery 10.

It should be noted that the specific structure of the sampling member 123 and principles for realizing the sampling of different parameter information have been applied in the related art, and will not be elaborated here.

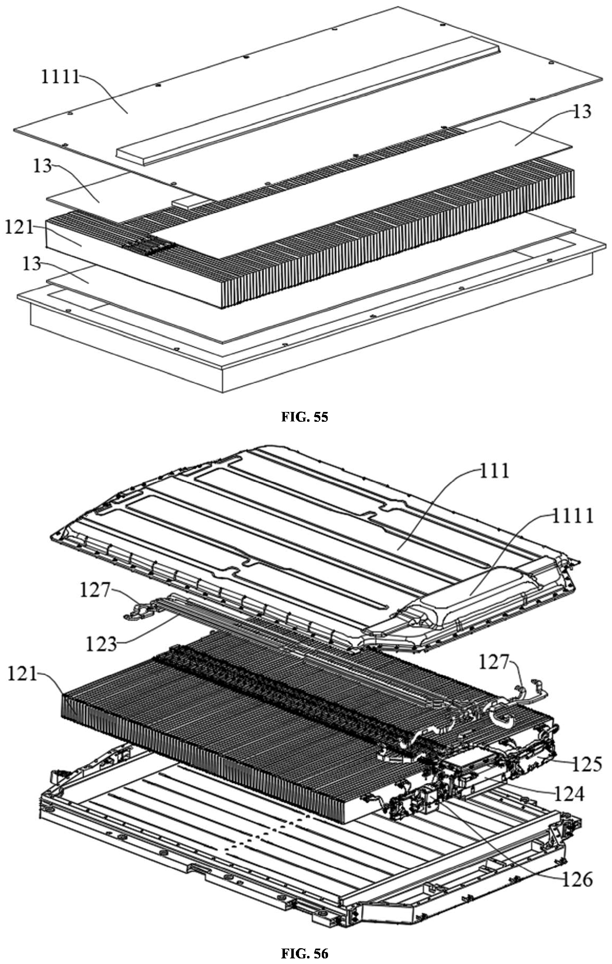

In some embodiments, referring to FIGS. 56 to 58, the battery assembly 12 further includes a battery management system 124, and at least part of the battery management system 124 is accommodated in the accommodation portion 111b. That is, the part of the protruding part 12a located in the accommodation portion 111b includes a part of the battery management system 124.

The battery management system 124 is used to manage and control various electrical devices in each battery 10, monitor an operating state of the battery 10, and adopt appropriate control strategies according to its operating state to prevent the battery 10 from overcharging and over-discharging, so as to prolong the service life of the battery 10.

This allows the shape of the accommodation portion 111b to better adapt to the outer contour shape of the battery management system 124, reducing the arrangement requirements of the battery management system 124. It helps to reduce the overall size and volume of the accommodation housing 11 and improve the space utilization rate in the accommodation housing 11.

In some embodiments, referring to FIGS. 56 to 58, the battery assembly 12 further includes a relay 125, and at least part of the relay 125 is accommodated in the accommodation portion 111b. That is, the part of the protruding part 12a located in the accommodation portion 111b includes a part of the relay 125.

When the battery 10 in the electrical apparatus needs to be charged or discharged, the relay 125 responds to an instruction of an electrical system to turn on or off the connection between the battery 10 and other electrical devices in the electrical apparatus, so as to realize the transmission or interruption of electrical energy.

This allows the shape of the accommodation portion 111b to better adapt to the outer contour shape of the relay 125, reducing the arrangement requirements of the relay 125. It helps to reduce the overall size and volume of the accommodation housing 11 and improve the space utilization rate in the accommodation housing 11.

In some embodiments, referring to FIGS. 56 to 58, the battery assembly further includes a high-voltage distribution unit 126, and at least part of the high-voltage distribution unit 126 is accommodated in the accommodation portion 111b. That is, the part of the protruding part 12a located in the accommodation portion 111b includes a part of the high-voltage distribution unit 126.

The high-voltage distribution unit 126 is used to monitor a high-voltage connection state and an insulation state in the battery 10 in real time, so as to manage the high-voltage power safety in the battery 10.

This allows the shape of the accommodation portion 111b to better adapt to the outer contour shape of the high-voltage distribution unit 126, reducing the arrangement requirements of the high-voltage distribution unit 126. It helps to reduce the overall size and volume of the accommodation housing 11 and improve the space utilization rate in the accommodation housing 11.

In some embodiments, referring to FIG. 56, the battery assembly further includes a high and low voltage wiring harness 127, and at least part of the high and low voltage wiring harness 127 is accommodated in the accommodation portion 111b. That is, the part of the protruding part 12a located in the accommodation portion 111b includes a part of the high and low voltage wiring harness 127.

The high and low voltage wiring harness 127 is used to electrically connect various components in the battery assembly 12 to transmit high and low voltage currents and realize the transmission of electrical energy and control signals.

This allows the shape of the accommodation portion 111b to better adapt to the wiring arrangement of the high and low voltage wiring harness 127, reducing the risk of damage to the high and low voltage wiring harness 127 by bending and extrusion, helping to reduce the overall size and volume of the accommodation housing 11 and improving the space utilization rate in the accommodation housing 11.

In some embodiments, referring to FIGS. 8, 9 and 58, the accommodation portion 111b includes a first accommodation sub-portion 111c and a second accommodation sub-portion 111d, a part of the protruding part 12a is accommodated in a space of the first accommodation sub-portion 111c, and the other part of the protruding part 12a is accommodated in a space of the second accommodation sub-portion 111d.

That is, different parts of the protruding part 12a are respectively located in different accommodation portions 111b.

In this way, the shapes of the first accommodation sub-portion 111c and the second accommodation sub-portion 111d can adapt to each other according to the actual outer contour shape of the protruding part 12a. This helps to reduce the outer contour size and overall volume of the accommodation portion 111b, so as to make the structure of the battery 10 more compact, reduce the overall volume of the battery 10, and improve the energy density of the battery 10.

It is understandable that the first accommodation sub-portion 111c and the second accommodation sub-portion 111d can communicate with each other or isolated from each other, which is selected depending on the arrangement demands of the parts within the battery assembly.

In some embodiments, referring to FIGS. 2 to 4, and 26 to 53, the bulge 1214 on the outer surface of the first housing wall 111 forms a boss 1111, and the boss 1111 is located on a side of the accommodation portion 111b facing away from the accommodation cavity 111a. In other words, the boss 1111 and the accommodation portion 111b are correspondingly provided.

In this way, it is beneficial to making the region of the first housing wall 111 provided with the bulge 1214 consistent with other thicknesses, which is beneficial to the overall size of the first housing wall 111, and in turn, to reducing three-dimensional sizes of the accommodation housing 11, reducing the overall volume of the battery 10, and facilitating the improvement of the energy density and space utilization rate of the battery 10.

The specific method in which the accommodation portion 111b and the boss 1111 are formed on the first housing wall 111 is not limited. For example, the first housing wall 111 is made of metal, and the accommodation portion 111b and the boss 1111 are formed in one step by a stamping process.

In some embodiments, referring to FIGS. 26 to 33, a length direction of the boss 1111 is the same as that of the accommodation cavity 111a, and sizes of the boss and the accommodation cavity in the length direction are the same. The length direction of the accommodation cavity 111a is the length direction of the battery 10.

This is beneficial to increasing the size of the accommodation portion 111b in the length direction of the battery 10 as much as possible, thereby facilitating the size and volume of the accommodation portion 111b to adapt to protruding parts 12a of various different sizes and shapes.

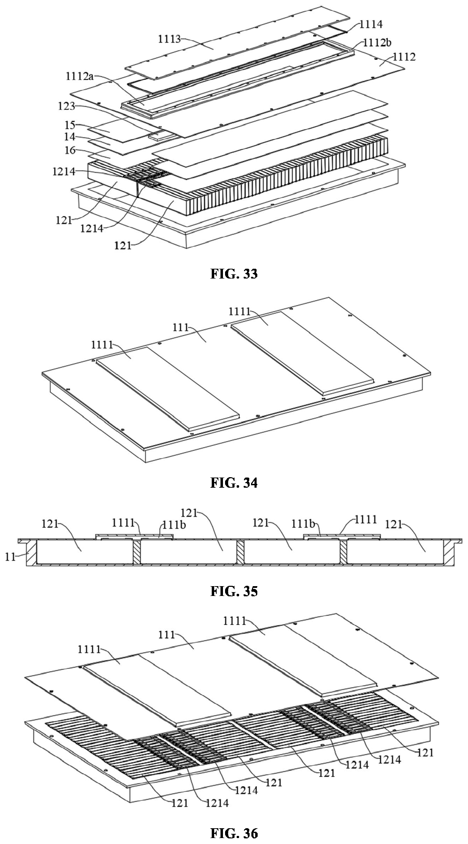

In some embodiments, referring to FIGS. 34 to 36, the length direction of the boss 1111 is the same as a width direction of the accommodation cavity 111a, and a length size of the boss 1111 is the same as a width size of the accommodation cavity 111a. The width direction of the accommodation cavity 111a is the width direction of the battery 10.

This is beneficial to increasing the size of the accommodation portion 111b in the width direction of the battery 10 as much as possible, thereby facilitating the size and volume of the accommodation portion 111b to adapt to protruding parts 12a of various different sizes and shapes.

In some embodiments, referring to FIG. 29, the width size of the boss 1111 does not exceed 500 mm, that is, L8≤500 mm.

Thus, on the one hand, it is beneficial to making the surface of the first housing wall 111 to have a larger flat region, so as to adapt to other parts in the electrical apparatus and reduce the adverse effects of the boss 1111 on the arrangement of other parts in the electrical apparatus; and on the other hand, it reduces the adverse effects of the reduced structural strength of the boss 1111 due to its large width size and reduces the probability of damage to parts in the accommodation portion 111b due to deformation of the boss 1111.

In some embodiments, referring to FIG. 29, the width size of the boss 1111 ranges from 50 mm to 300 mm, i.e., 50 mm≤L8≤ 300 mm. This facilitates the space in the accommodation portion 111b to meet the arrangement requirements of the protruding part 12a.

The width size of the boss 1111 is not limited to any specific value. Exemplarily, the width size of the boss 1111 may be 50 mm, 80 mm, 100 mm, 200 mm, 300 mm, and the like.

In some embodiments, referring to FIG. 31, the height size of the boss 1111 does not exceed 300 mm, that is, L9≤300 mm.

Thus, it can adapt to other parts in the electrical apparatus, reducing the adverse effect of the boss 1111 on the arrangement of other parts in the electrical apparatus; and at the same time, it reduces the probability that the boss 1111 is deformed and bent due to shear stress perpendicular to the height direction applied to the boss 1111, thus damaging the protruding part 12a in the accommodation portion 111b.

In some embodiments, referring to FIG. 31, a height size of the boss 1111 ranges from 5 mm to 100 mm, that is, 5 mm≤L9≤100 mm.

This facilitates the space in the accommodation portion 111b to meet the arrangement requirements of the protruding part 12a.

The height size of the boss 1111 is not limited to any specific value. Exemplarily, the width size of the boss 1111 may be 5 mm, 10 mm, 20 mm, 30 mm, 40 mm, 50 mm, 60 mm, 70 mm, 80 mm, 90 mm, 100 mm, and the like.

In an embodiment where the bulge 1214 is provided and at least part of the bulge 1214 is located in the accommodation portion 111b, referring to FIGS. 21 and 31, the height size of the bulge 1214 does not exceed 77% of the height size of the boss 1111. That is, L7/L9≤77%.

In this way, on the one hand, it is beneficial to making the bulge 1214 and the accommodation portion 111b spaced apart in the height direction of the battery 10, so as to reduce the probability of damage caused by direct abutting between the bulge and the accommodation portion, and also to facilitate the arrangement of other parts of the battery assembly 12 in the accommodation portion 111b; and on the other hand, it allows the thickness of the boss 1111 to better protect the bulge 1214.

In some embodiments, the height size of the bulge 1214 accounts for a range of 36% to 53% of the height size of the boss 1111. That is, 36%≤L7/L9≤53%.

In this way, the size of the space in the accommodation portion 111b is further made to meet the demand for arranging other parts of the battery assembly 12, and it further beneficial to making the boss 1111 to have sufficient strength to protect the bulge 1214.

In some embodiments, referring to FIG. 31, a height size of the protruding part 12a does not exceed 94% of the height size of the boss 1111. That is, L7/L9≤94%.

This is beneficial to reducing the probability of abutting between the protruding part 12a and the boss 1111 in the vertical direction, thus reducing the probability of damage to the protruding part and the boss caused by abutting.

In some embodiments, referring to FIG. 31, the height size of the protruding part 12a accounts for a range of 74% to 86% of the height size of the boss 1111.

This is beneficial to reducing the probability of abutting between the protruding part 12a and the boss 1111 in the vertical direction, and beneficial to improving the space utilization rate of the protruding part 12a to the accommodation portion 111b.

In some embodiments, part or all of the boss 1111 is detachably configured. In other words, part or all of the boss 1111 can be detachably separated from other parts of the housing body.

It is understandable that after detaching, a channel making the accommodation cavity 111a to communicate with the outside can be formed on the boss 1111 or the first housing wall 111.

This facilitates the inspection and repair of the battery assembly 12 in the battery 10 through the formed channel by detaching part or all of the boss 1111, without having to completely disassemble the housing body, thereby simplifying the operation steps.

There is no limit to the specific method of implementing that part or all of the boss 1111 is detachably configured.

In some embodiments, referring to FIGS. 8 to 10, the first housing wall 111 includes a housing wall body 1112 and a mounting plate 1113, the housing wall body 1112 is provided with a penetrating through hole 1112a, the through hole 1112a communicates with the accommodation cavity 111a, an edge of the through hole 1112a is annularly provided with a mounting step 1112b extending in a direction away from the accommodation cavity 111a, the mounting plate 1113 detachably covers the mounting step 1112b to seal the through hole 1112a, the mounting step 1112b and the mounting plate 1113 jointly form the boss 1111, and an inner wall of the through hole 1112a and a surface of the mounting plate 1113 toward the accommodation cavity 111a form the accommodation portion 111b in an enclosing mode.

In other words, the mounting plate 1113 forms a detachable part of the boss 1111. In this way, after the boss 1111 is detached, the battery assembly 12 located in the through hole 1112a and in the accommodation cavity 111a can be inspected and repaired through an open part of the through hole 1112a.

The mounting plate 1113 is plate-shaped and is matched with the mounting step 1112b, making it easy to mount.

There is no limit to the specific method of implementing the detachable connection between the mounting plate 1113 and the mounting step 1112b. For example, the connection between the mounting plate 1113 and the mounting step 1112b is implemented by a threaded fit of screws and threaded holes.

In some embodiments, referring to FIGS. 31 to 33, the first housing wall 111 includes a sealing ring 1114, which is sandwiched between the mounting step 1112b and the mounting plate 1113. The sealing ring 1114 can undergo elastic deformation so that the sealing ring can be in a sealing fit with the mounting step 1112b and the mounting plate 1113 respectively, thereby reducing the probability of outside foreign objects entering the battery 10 through a joint between the mounting step 1112b and the mounting plate 1113 during use of the battery 10.

In some other embodiments, referring to FIG. 32, the first housing wall 111 includes a housing wall body 1112 and a mounting plate 1113, the housing wall body 1112 is provided with a penetrating through hole 1112a, the through hole 1112a communicates with the accommodation cavity 111a, the mounting plate 1113 detachably covers the housing wall body 1112 to seal the through hole 1112a, and an inner wall of the through hole 1112a and a surface of the mounting plate 1113 toward the accommodation cavity 111a form the accommodation portion 111b in an enclosing mode.

That is, the boss 1111 is formed by the mounting plate 1113 only.

This simplifies the structure of the boss 1111 and the housing wall body 1112, making it easier to reduce production costs.

In some embodiments, referring to FIG. 32, the first housing wall 111 includes a sealing ring 1114, which is sandwiched between the housing wall body 1112 and the mounting plate 1113. The sealing ring 1114 can undergo elastic deformation so that the sealing ring can be in a sealing fit with the housing wall body 1112 and the mounting plate 1113 respectively, thereby reducing the probability of outside foreign objects entering the battery 10 through a joint between the housing wall body 1112 and the mounting plate 1113 during use of the battery 10.

Understandably, it is necessary to fix the battery assembly 12 within the battery 10.

In some embodiments, referring to FIG. 55, the battery 10 includes a first adhesive layer 13, and the first adhesive layer 13 adheres between an inner wall of the accommodation cavity 111a and the battery assembly 12.

In this way, the inner wall of the accommodation cavity 111a and the battery assembly 12 are bonded by the adhesive force of the first adhesive layer 13, so that the relative position between the battery assembly 12 and the housing body can be kept fixed. At the same time, the first adhesive layer 13 is formed by applying adhesive, which helps to improve operation efficiency.

In some embodiments where the first adhesive layer is provided, referring to FIG. 55, the accommodation portion 111b is located on the top side of the accommodation housing 11 in the height direction, the top wall of the battery cell 121 in the height direction of the accommodation cavity 111a is the first case wall 1212, and the first adhesive layer 13 adheres between the inner wall of the top side of the accommodation cavity 111a in the height direction of the accommodation cavity 111a and the first case wall 1212.

The height direction of the accommodation housing 11, i.e., the height direction of the battery 10, is also the direction of gravity.

In this way, the first adhesive layer 13 can play a role in separating and sealing, preventing the accommodation portion 111b and objects in the accommodation cavity 111a from entering each other. At the same time, the larger area of the first case wall 1212 can be used to apply as much adhesive as possible to form the first adhesive layer 13, thereby improving the adhesion and fixing effect.

In some embodiments where the first adhesive layer is provided, referring to FIG. 55, the first adhesive layer 13 adheres between an inner wall of a bottom side of the accommodation cavity 111a in the height direction of the accommodation cavity 111a and a bottom wall of the battery cell 121 in the height direction of the accommodation cavity 111a.

This is beneficial to making uncured adhesive to avoid the parts of the terminal post 1213, the sampling member 123 and the busbar 122 during the adhesive applying process, reducing the adverse effects of the adhesive on the normal operation of the parts in the battery 10. At the same time, the adhesive can be spread more evenly by utilizing the gravitational compression of the battery cell 121.

In some embodiments, referring to FIGS. 8, 9, 31, 32, 47, and 54, the battery 10 includes a temperature control assembly 14, and the temperature control assembly 14 is sandwiched between the inner wall of the accommodation cavity 111a and the battery assembly 12.

The temperature control assembly 14 is provided with a flow channel and a temperature control medium inside. The temperature control medium can flow in the flow channel to transfer heat from a part of the region in the temperature control assembly 14 to another part of the region, thereby achieving the purpose of adjusting the temperature of the object in contact with the temperature control assembly 14.

In this way, the temperature control assembly 14 absorbs heat generated during the operation of the battery assembly 12, reducing the operation temperature of the battery assembly 12 and improving the use safety of the battery 10. At the same time, the temperature control assembly 14 can directly radiate part of the heat to the outside through the housing wall of the accommodation housing 11 directly, increasing the heat dissipation area and improving the temperature control effect.

The specific type of the temperature control medium is not limited, such as water.

It should be noted that the specific structure of the temperature control assembly 14 and a heat exchange principle have been applied in the related art, and will not be elaborated here.

In some embodiments, the temperature control assembly 14 is located between the inner wall of the accommodation cavity 111a and the first case wall 1212. In this way, the advantage of the larger area of the first case wall 1212 can be better utilized to increase the contact area between the temperature control assembly 14 and the battery cell 121, and the heat generated during the operation of the battery 10 can be transferred to the housing wall more effectively and radiated to the outside, thereby improving the temperature control effect.

In some embodiments, referring to FIGS. 8, 9, 31, 32, 47, and 54, the temperature control assembly 14 is located between the inner wall of the top side of the accommodation cavity 111a in the height direction of the accommodation cavity 111a and a top surface of the case 1211 in the height direction of the accommodation cavity 111a.

In this way, the temperature control assembly 14 is not affected by the gravitational compression of the battery assembly 12, thus preventing the impact on the implementation of its temperature control function.

In some embodiments where the protruding part 12a is located on the top of the battery assembly 12, the temperature control assembly 14 is located between the inner wall of the bottom side of the accommodation cavity 111a in the height direction of the accommodation cavity 111a and a bottom surface of the battery assembly 12 in the height direction of the accommodation cavity 111a.

In this way, the possibility of interference between the arrangement of the temperature control assembly 14 and the protruding part 12a is reduced.

It is understandable that the temperature control assembly 14 needs to be fixed in position within the battery 10 so that the temperature control effect of the temperature control assembly 14 can be fully exerted.

In some embodiments, referring to FIGS. 8, 9, 31 and 32, the battery 10 includes a second adhesive layer 15, and the second adhesive layer 15 adheres between the inner wall of the accommodation cavity 111a and an outer surface of the temperature control assembly 14.

This fixes the relative position between the temperature control assembly 14 and the accommodation housing 11, reducing the probability of frictional damage caused by relative movement between the temperature control assembly 14 and the accommodation housing 11. At the same time, it is convenient for the temperature control assembly 14 to directly transfer heat to the accommodation housing 11 and radiate the heat to the outside.

In some embodiments, referring to FIGS. 8, 9, 31 and 32, the battery 10 includes a third adhesive layer 16, and the third adhesive layer 16 adheres between the inner wall of the accommodation cavity 111a and an outer surface of the battery assembly 12.

This fixes the relative position between the temperature control assembly 14 and the battery assembly 12, reducing the probability of frictional damage caused by relative movement between the temperature control assembly 14 and the battery assembly 12, and the heat can be better transferred between the temperature control assembly 14 and the battery assembly 12, improving the temperature control effect.

Referring to FIGS. 31 to 33, in an embodiment where the temperature control assembly 14 is located between the inner wall of the top side of the accommodation cavity 111a in the height direction of the accommodation cavity 111a and the top surface of the case 1211 in the height direction of the accommodation cavity 111a, the third adhesive layer 16 is located between the inner wall of the top side of the accommodation cavity 111a in the height direction of the accommodation cavity 111a and the top surface of the temperature control assembly 14.

Thus, through the adhesion effect of the third adhesive layer 16, the force exerted by the temperature control assembly 14 against the battery assembly 12 under gravity is reduced, which is beneficial to the normal operation of the battery assembly 12 and the temperature control assembly 14.

An embodiment of the present application further provides an electrical apparatus. The electrical apparatus includes any battery 10 in the foregoing embodiments. The battery 10 serves as a power source for the electrical apparatus.

In this way, by setting the fit between an accommodation portion 111b and a protruding part 12a, it is beneficial to reducing the overall volume of the electrical apparatus and making the structure of the electrical apparatus more compact.

In some embodiments, referring to FIGS. 59 and 60, the electrical apparatus is a vehicle 100, which includes a seat 20 and any battery 10 in the foregoing embodiments, and a boss 1111 is located on a side of an accommodation housing 11 facing the seat 20.

The battery 10, which serves as the power source for the vehicle 100, is used to provide power for the normal operation of the vehicle 100, such as traveling and powering equipment.

The seat 20 is used by an occupant of the vehicle 100 for sitting and placing items.

In this way, it is beneficial to increasing the capacity of the battery 10 in the vehicle 100, which in turn is beneficial to increasing the capacity of the battery 10, and beneficial to increasing the driving mileage of the vehicle 100. Simultaneously, it allows the flat housing wall of the accommodation housing 11 to face the ground side, resulting in a smoother surface of a bottom side of the vehicle 100, reducing a drag coefficient of the vehicle 100 and increasing a ground clearance of the vehicle 100. This prevents damage to the battery 10 caused by increased drag from the boss 1111 or collisions with road debris during driving of the vehicle 100.

The drag coefficient is a parameter used to describe the gas resistance an object experiences in a gas. The value of the drag coefficient reflects the degree to which the shape of an object affects gas flow. The higher the drag coefficient, the greater the air resistance the object encounters during traveling. Therefore, the magnitude of the drag coefficient is directly related to the energy consumption of the vehicle 100 during traveling.

The ground clearance refers to a distance between the ground and a rigid object at a bottom of a vehicle body during traveling of the vehicle 100. The magnitude of the ground clearance directly affects the off-road capability of the vehicle 100.

In some embodiments, referring to FIG. 59, the vehicle 100 includes a vehicle body element 50, a bottom side of the vehicle body element 50 is open, the battery 10 is disposed in an open position of the vehicle body element 50 to jointly form an occupant space 100a with the vehicle body element 50 in an enclosing mode, and the seat 20 is located in the occupant space 100a.

The vehicle body element 50, i.e., a white vehicle body, refers to a vehicle body that has been welded but not yet painted. The painted white vehicle body, along with the interior and exterior trim, electronic and electrical systems, a chassis 60 system, and a powertrain system, constitute a complete vehicle.

In other words, the vehicle body element 50 and the battery 10 together form a compartment of the vehicle 100, and the bulge 1214 is located in the occupant space 100a. This allows for an increase in the volume of the battery 10 in a case of limitations on three-dimensional sizes of the vehicle 100. It facilitates the use of a space in the occupant space 100a by the bulge 1214, thereby improving the space utilization rate in the occupant space 100a.

In some embodiments, referring to FIG. 59, the vehicle includes 100 a chassis 60, the vehicle body element 50 is disposed on the chassis 60, the chassis 60 includes the battery 10, and a first housing wall 111 forms a bottom plate of the occupant space 100a.

That is, the battery 10 serves as a part of the chassis 60. In this way, the battery 10 helps to improve the overall structural strength of the chassis 60. The first housing wall 111 serves as the bottom plate of the occupant space 100a, helping to improve the utilization rate of the space in the vehicle. At the same time, it helps to improve the structural strength of the entire occupant space 100a structure and enhances the safety of the vehicle 100.

Understandably, felt or other parts can be laid on the surface of the first housing wall 111 to improve the riding experience and visual experience of the occupant.

Understandably, the boss 1111 and the seat 20 are matched with each other to improve the utilization rate of the space in the vehicle 100.

In some embodiments, referring to FIGS. 59 to 65, in projections perpendicular to a vertical direction, part or all of the projection of the boss 1111 is located in a projection range of the seat 20.

It is understandable that when the occupant sits in the seat 20, due to a sitting posture of the occupant, the space below the contact face between the occupant and seat 20 during sitting includes the seat 20 itself and the space below the seat 20 and is not accessible or difficult for the occupant's limbs to reach. At least part of the boss 1111 is located in the space below the contact face with the seat 20 during sitting of the occupant.

In this way, the boss 1111 utilizes the space under the seat 20, reducing the probability of the occupant touching the boss 1111 during the ride, thereby reducing the encroachment of disposing of the boss 1111 on the normal activity space of the occupant, improving the user experience, and increasing the space utilization rate in the vehicle 100.

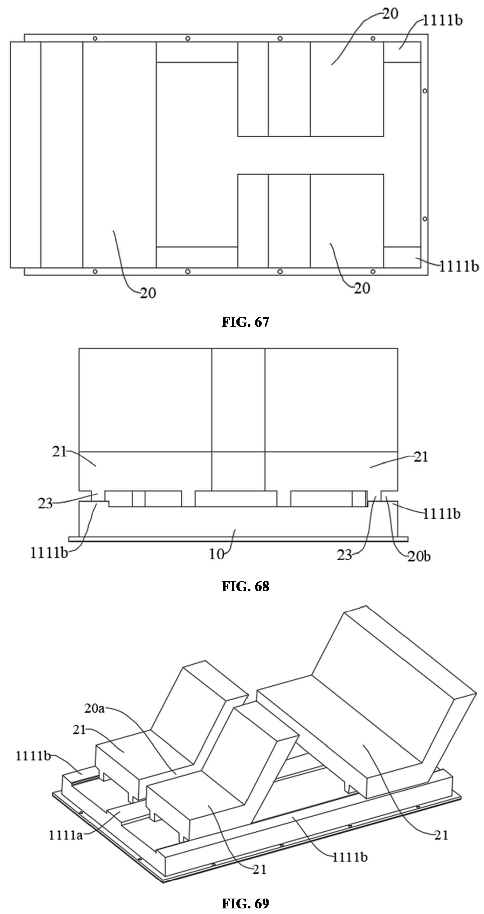

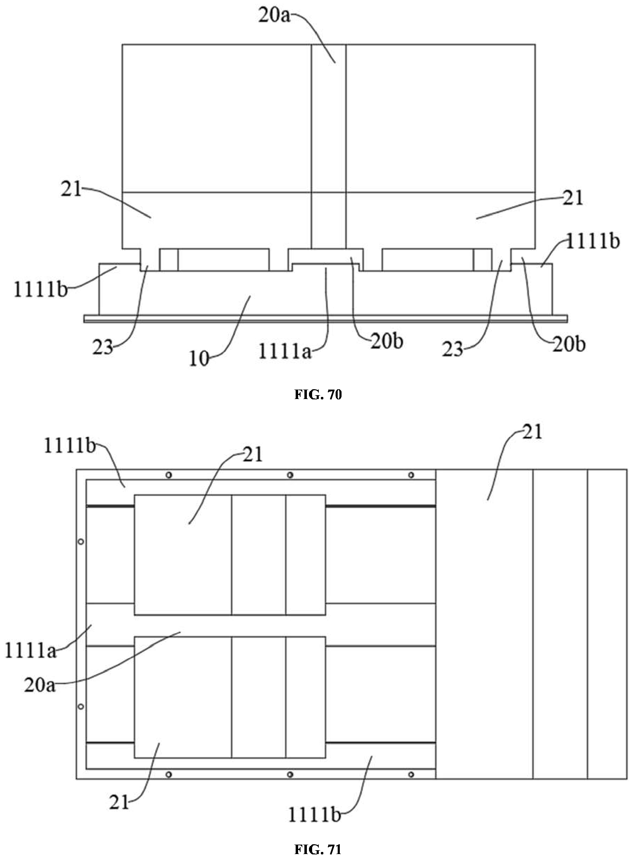

In some embodiments, referring to FIGS. 59 to 71, the boss 1111 is located below the seat 20, that is, in the height direction of the vehicle 100, the top of the boss 1111 is lower than the vehicle 100.

In some embodiments, referring to FIGS. 60 to 62, and 65, a plurality of seats 20 are provided and spaced apart to form at least one row, a first gap 20a is formed between the seats 20 in the same row spaced apart in a width direction of the vehicle 100, the boss 1111 includes a first boss 1111a, and part or all of the first boss 1111a is located in the first gap 20a.

The length direction of the vehicle 100 refers to the direction in which the size with the largest size value is located among the three-dimensional sizes of vehicle 100. Generally, the length direction of the vehicle 100 is also the forward or backward direction of the vehicle 100 when it travels in a straight line.

The width direction of the vehicle 100 refers to the direction in which a size, among the three-dimensional size of the vehicle 100, perpendicular to the length direction and the direction of gravity is located. The direction of gravity is a vertical direction.

It is understandable that when the occupant sits in the seat 20, due to the sitting posture of the occupant, it is difficult for the occupant's legs to enter the first gap 20a.

In this way, the boss 1111 can utilize the space in the first gap 20a, which improves the volume of the battery 10 while reducing the probability of the occupant touching the boss 1111 during the ride, thereby reducing the interference of the boss 1111 with the normal activities of the occupant, and increasing the space utilization rate in the vehicle 100.

There is no limit to the number of seats 20 in each row, such as one, two, and three. It is understandable that other equipment in the vehicle 100, such as an armrest, a car refrigerator, and a storage case, can also be arranged in the first gap 20a to improve the space utilization rate in the vehicle and enhance the user experience.

It is understandable that the projection of a part of the boss 1111 is within the projection range of the seat 20, and another part of the boss is within the first gap 20a.

In some embodiments, referring to FIGS. 60 to 62, the plurality of seats 20 are divided into at least two rows spaced apart in a length direction of the vehicle 100, and the first boss 1111a extends in the length direction of the vehicle 100 under another adjacent row of seats 20.

Thus, on the one hand, the first boss 1111a extends in the length direction of the vehicle 100. With a fixed projected area of the first boss 1111a perpendicular to the vertical direction, it is beneficial to reducing the size of the first boss 1111a in the width direction of the vehicle 100. This helps to reduce the interference of the first boss 1111a with riding of a plurality of passengers in the vehicle, improves the user experience, reduces the probability of interference with passenger riding and activities, and helps to improve the space utilization rate of the space in the vehicle 100 by the battery 10 and increase the capacity of the battery 10. On the other hand, it allows the first boss 1111a to more utilize the space in the first gap 20a, further improving the space utilization rate in the vehicle 100.

It is understandable that the occupants are less likely to sit on the part of the seat 20, i.e., the seats 20 in the row adjacent to the first gap 20a in the length direction of the vehicle 100, that corresponds to the first gap 20a in the length direction of the vehicle 100.

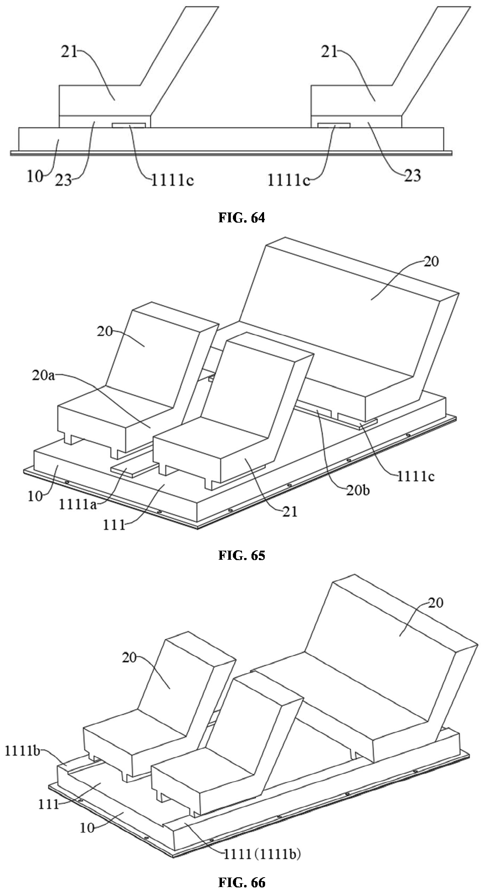

In some embodiments, referring to FIGS. 66 to 71, the boss 1111 includes second bosses 1111b, and the second bosses 1111b extend in the length direction of the vehicle 100 and are located on a side of the seat 20 in the width direction of the vehicle 100. The seat 20 is located between the two second bosses 1111b.

This can reduce the interference of the second bosses 1111b on the leg and foot movements of the occupant, improving the use experience of the occupant. In some embodiments, referring to FIGS. 66 to 71, the number of the second bosses 1111b is two, the two second bosses 1111b are respectively located at one end of the battery 10 in the width direction of the vehicle 100, and the seat 20 is located between the two second bosses 1111b. In other words, the seat 20 is located in the region between the two second bosses 1111b.

This increases the space for leg and foot movements of the occupant, further reduces the interference of the second bosses 1111b in leg and foot movements of the occupant, and effectively utilizes the space of an edge along the width of the vehicle 100.

In some embodiments, referring to FIGS. 66 to 71, the second bosses 1111b extend in the length direction to two ends of the battery 10 in the length direction of the vehicle 100, so as to further improve the space utilization rate of the space in the vehicle 100 by the battery 10 and increase the capacity of the battery 10.

In some embodiments, the second bosses 1111b are spaced apart from the seat 20 in the width direction of the vehicle 100.

This helps to increase a movement space for the leg and foot movements of the occupant and improve riding experience of the user.

In some embodiments, part of the second boss 1111b is located under the seat 20. This helps to reduce the sizes of the battery 10 and the vehicle 100 in the width direction, making the structure of the battery 10 and the vehicle 100 more compact.

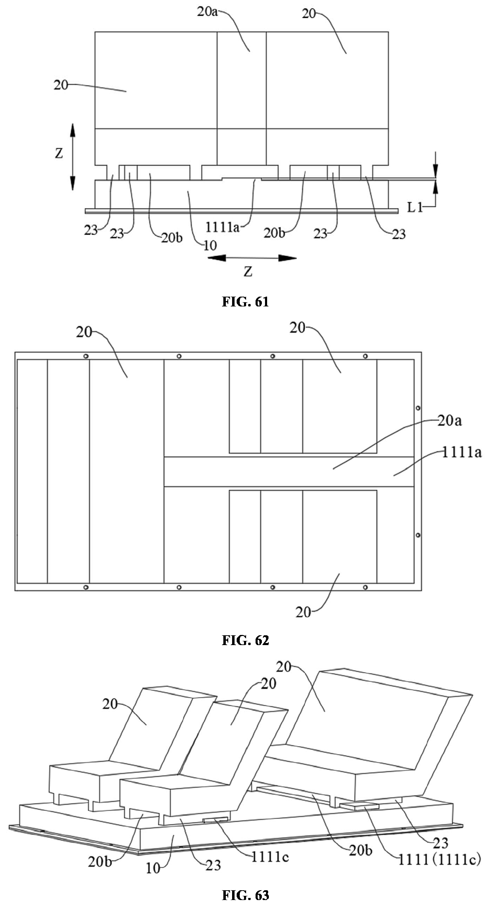

In some embodiments, referring to FIGS. 63 to 65, the boss 1111 includes one or more third bosses 1111c, the third boss 1111c extends in the width direction of the vehicle 100, and at least part of the third boss 1111c is located under the seats 20 in the same row. In this way, the third boss 1111c can make full use of the space under the seat 20 in the width direction of the vehicle 100. At the same time, the third boss 1111c can reduce the encroachment on the space between two adjacent rows of seats 20, reduce interference in the activities of occupants, and improve the occupant experience.

In some embodiments, referring to FIG. 63, a part of the third boss 1111c is located below the seat 21, and the other party is located in the first gap 20a.

This allows the third boss 1111c to make better use of the space under the seat 20 and the space in the first gap 20a, which helps to improve the space utilization rate within the vehicle 100 by the battery 10 and increase the capacity of the battery 10.

Understandably, there are a plurality of first gaps 20a between a plurality of seats 20 in the same row, and the third boss 1111c extends in the width direction of the vehicle 100, passes through all the first gaps 20a and is located below each seat 20 in the same row to improve the space utilization rate.

In some embodiments, referring to FIGS. 63 to 65, the plurality of seats 20 are divided into at least two rows spaced apart in a length direction of the vehicle 100. One or more rows of seats 20 are considered as one and extend in the width direction of the vehicle 100, and the width of the seat 20 is not less than the width of the top surface of the battery 10. The third boss 1111c extends in the width direction and is located below the row of seats 20. In other words, this row of seats 20 can make full use of the space in the vehicle in the width direction of the vehicle 100 to carry more occupants at the same time.

In this way, the third boss 1111c can increase its size in the width direction of the vehicle 100 as much as possible, so as to better utilize the space under the seat 20, which is conducive to improving the space utilization rate of the space in the vehicle 100 by the battery 10, and increasing the capacity of the battery 10.

It is understandable that the boss 1111 adapts to the specific structure of the seat 20.

In some embodiments, referring to FIGS. 60, 61, 63, 65 and 70, the seat 20 includes a seat base 21, a second gap 20b is formed between at least part of the seat base 21 and the battery 10 which are spaced apart in a height direction of the vehicle 100, and at least part of the boss 1111 is located in the second gap 20b and spaced apart from the seat base 21 in the vertical direction.

The seat base 21 is used for the occupant to sit on so as to support the weight of the occupant.

This can reduce the probability of the boss 1111 being damaged by the pressure of occupant sitting due to direct contact between the boss 1111 and the seat base 21.

The specific method of forming the second gap 20b is not limited.

For example, referring to FIGS. 60, 61, 63, 65 and 70, the seat 20 includes a leg 23, the seat base 21 is spaced apart from the battery 10 in the vertical direction to form the second gap 20b, and the leg 23 is connected between the seat base 21 and the battery 10.

This facilitates achieving the spacing between the seat base 21 and the boss 1111, resulting in a regular shape of the seat base 21 that is easy to place. It also helps to release heat during operation of the battery 10, facilitates inspection, disassembly, assembly, and maintenance through the second gap 20b, and allows the occupant to extend feet into the second gap 20b, enabling the occupant to sit comfortably and improving ride comfort.

It is understandable that the connection position of the leg 23 to the battery 10 is not limited. Referring to FIG. 63, the connection position can be located on the boss 1111. Referring to FIG. 60, the connection position can also be located in other regions of the first housing wall 111 other than the boss 1111.

The leg 23 is detachably connected to the battery 10.

It can be understood that there is no limit to the number of legs 23, which may be one or more.

In some embodiments, referring to FIG. 60, a plurality of legs 23 are provided, the plurality of legs 23 are spaced apart in the width direction of the vehicle 100, and part or all of the boss 1111 is located between two legs 23 adjacent to each other in the width direction of the vehicle 100.

This facilitates the arrangement of the boss 1111, utilizing the space between the two legs 23 to improve the space utilization rate of the space in the vehicle 100 by the battery 10 and increase the capacity of the battery 10.

Understandably, the seat base 21 includes a cushion 211, which is made of a material such as sponge that can undergo elastic deformation so as to improve the riding experience of the occupant.

Understandably, it is necessary to constrain the shape of the cushion 211 so as to support the seat base 21.

In some embodiments where the cushion 211 is provided, referring to FIG. 59, the boss 1111 is embedded in the cushion 211 to support the seat base 21 in the height direction of the vehicle 100.

In other words, the boss 1111 forms at least part of the structure that supports the cushion 211. This helps to simplify the structure of the seat 20, improve the utilization rate of the space in the seat 20, and reduce production costs.

Understandably, the seat base 21 includes a frame that is inserted into and attached to the cushion 211 to constrain the shape of the cushion 211.

In some embodiments, the frame is connected to the boss 1111 to form a force transmission path of the cushion 211, the frame, and the boss 1111, thereby transferring the weight of the occupant to the battery 10.

The embodiments provided in the present disclosure may be combined with each other without contradiction.

The above descriptions are merely preferred embodiments of the present disclosure, but are not intended to limit the present disclosure. It will be apparent to those skilled in the art that various modifications and changes may be made in the present disclosure. Any modifications, equivalent replacements and improvements made within the spirit and principle of the present disclosure shall be included within the scope of protection of the present disclosure.

### Industrial applicability

Embodiments of the present disclosure provide a battery and an electrical apparatus that contribute to enhancing a space utilization rate.

## Claims

1. A battery, comprising:
an accommodation housing, provided with an accommodation cavity, wherein the accommodation housing comprises a first housing wall; and
a battery assembly, accommodated in the accommodation cavity, wherein the battery assembly comprises a protruding part; and
the first housing wall is provided with an accommodation portion, and at least part of the protruding part is accommodated in the accommodation portion.

2. The battery according to claim 1, wherein in a thickness direction of the first housing wall, a part of a projection of the battery assembly is located outside a projection of the accommodation portion.

3. The battery according to claim 1, wherein the battery assembly further comprises a plurality of battery cells, the battery cells each comprise a case, the case has a first case wall, and the protruding part is disposed on the first case wall.

4. The battery according to claim 3, wherein the battery assembly further comprises a busbar, each battery cell further comprises a terminal post, the terminal post is disposed on the first case wall, the busbar is electrically connected to the terminal posts of two battery cells, the protruding part comprises the busbar, and at least part of the busbar is accommodated in the accommodation portion.

5. The battery according to claim 4, wherein at least part of each terminal post is accommodated in the accommodation portion.

6. The battery according to claim 4 or 5, wherein the terminal posts of at least two battery cells are located in the same accommodation portion.

7. The battery according to claim 4, wherein spacing between an inner wall of the accommodation portion and the busbar in a first direction is not less than 1% of a size of the accommodation portion in the first direction, and the first direction is perpendicular to the thickness direction of the first housing wall.

8. The battery according to claim 4, wherein a ratio of spacing between an inner wall of the accommodation portion and the busbar in a first direction to a size of the accommodation portion in the first direction ranges from 2% to 10%.

9. The battery according to any one of claims 1 to 8, wherein the battery comprises an insulator, and the insulator is disposed on the inner wall of the accommodation portion.

10. The battery according to claim 9, wherein the battery assembly comprises a battery cell, the battery cell comprises a terminal post, and the insulator is disposed opposite to the terminal post.

11. The battery according to any one of claims 3 to 10, wherein the first case wall comprises a bulge, the protruding part comprises the bulge, and at least part of the bulge is accommodated in the accommodation portion.

12. The battery according to claim 11, wherein the bulge is provided with the terminal post.

13. The battery according to claim 12, wherein the number of the terminal posts is two, polarities of the terminal posts are opposite, and the two terminal posts are disposed on the same bulge.

14. The battery according to claim 12, wherein the number of the terminal posts is two, polarities of the terminal posts are opposite, and the two terminal posts are respectively disposed on two bulges.

15. The battery according to claim 13 or 14, wherein the two terminal posts are spaced apart in a length direction of the first case wall.

16. The battery according to claim 13 or 14, wherein the two terminal posts are spaced apart in a width direction of the first case wall.

17. The battery according to any one of claims 11 to 16, wherein the battery cell further comprises an electrode assembly, the electrode assembly is accommodated in the case, a part of the first case wall is concave to form an avoidance groove, the avoidance groove is located on a side of the bulge close to the electrode assembly, and a part of the electrode assembly is located in the avoidance groove.

18. The battery according to claim 17, wherein the electrode assembly comprises a main body and a tab, the tab is disposed on an edge of one side of the main body and is electrically connected to the main body, and at least part of the tab is located in the avoidance groove.

19. The battery according to claim 18, wherein at least part of the tab is located in the accommodation portion.

20. The battery according to claim 18, wherein the battery cell further comprises a terminal post, the terminal post is disposed on the first case wall, the electrode assembly further comprises an adapter piece, the tab is electrically connected to the terminal post through the adapter piece, and at least part of the tab is located in the accommodation portion;
and/or, at least part of the adapter piece is located in the accommodation portion.

21. The battery according to claim 18, wherein a part of the main body is located in the avoidance groove.

22. The battery according to any one of claims 11 to 21, wherein the case comprises a cover plate and a case body, the cover plate covers an opening of the case body, and the bulge is disposed on the cover plate;
and/or, the bulge is disposed on the case body.

23. The battery according to any one of claims 11 to 21, wherein the number of the bulges on the first case wall is two, and the two bulges are respectively located at two opposite ends of the first case wall.

24. The battery according to any one of claims 11 to 23, wherein a distance between the bulge and one end of the first case wall in the length direction is greater than a distance between the bulge and the other end of the first case wall in the length direction.

25. The battery according to claim 24, wherein the bulge is located at one end of the first case wall in the length direction of the first case wall.

26. The battery according to any one of claims 11 to 23, wherein the bulge is located in a central position of the first case wall in the length direction of the first case wall.

27. The battery according to any one of claims 11 to 23, wherein spacing between a central position of the first case wall in the length direction thereof and a central position of the bulge in the length direction of the first case wall is first spacing, and a ratio of the first spacing to a length size of the first case wall is greater than 0 and does not exceed 47.5%.

28. The battery according to claim 27, wherein the ratio of the first spacing to the length size of the first case wall ranges from 40% to 47.5%.

29. The battery according to any one of claims 11 to 28, wherein a central position of the first case wall in the width direction thereof coincides with a central position of the bulge in the width direction of the first case wall.

30. The battery according to any one of claims 11 to 28, wherein spacing between a central position of the first case wall in the width direction thereof and a central position of the bulge in the width direction of the first case wall is second spacing, and a ratio of the second spacing to a width size of the first case wall is greater than 0 and does not exceed 25%.

31. The battery according to any one of claims 11 to 30, wherein a length size of the battery cell is not less than 350 mm;
and/or, a width size of the battery cell ranges from 5 mm to 50 mm;
and/or, a height size of the battery cell ranges from 80 mm to 200 mm.

32. The battery according to any one of claims 11 to 31, wherein a length direction of the bulge is the same as that of the first case wall, and a ratio of a length size of the bulge to the length size of the first case wall ranges from 2.5% to 97.5%;
and/or, a width direction of the bulge is the same as that of the first case wall, and a ratio of a width size of the bulge to the width size of the first case wall ranges from 25% to 100%;
and/or, a height size of the bulge does not exceed 45 mm.

33. The battery according to any one of claims 11 to 31, wherein a length direction of the bulge is the same as that of the first case wall, and a ratio of a length size of the bulge to the length size of the first case wall ranges from 5% to 40%;
and/or, a width direction of the bulge is the same as that of the first case wall, and a ratio of a width size of the bulge to the width size of the first case wall ranges from 60% to 90%;
and/or, a height size of the bulge ranges from 2 mm to 10 mm.

34. The battery according to any one of claims 11 to 33, wherein the battery cell comprises an explosion-proof valve, and the explosion-proof valve is located on the bulge; or, the explosion-proof valve and the bulge are located on the first case wall, and the explosion-proof valve is spaced apart from the bulge.

35. The battery according to any one of claims 11 to 33, wherein the battery cell comprises an explosion-proof valve, and the explosion-proof valve is located on a wall face in an outer surface of the battery cell facing away from the first case wall;
or, the explosion-proof valve is located on a wall face in the outer surface of the battery cell adjacent to the first case wall.

36. The battery according to any one of claims 11 to 35, wherein one battery cell comprises a plurality of bulges, and the plurality of bulges are located in the same accommodation portion.

37. The battery according to any one of claims 11 to 36, wherein the bulges of the plurality of battery cells are located in the same accommodation portion.

38. The battery according to any one of claims 11 to 35, wherein one battery cell comprises a plurality of bulges, the first housing wall comprises a plurality of accommodation portions, and the respective bulges in one single battery cell are respectively located in the different accommodation portions.

39. The battery according to any one of claims 11 to 35, wherein the plurality of battery cells are arranged in the first direction, one battery cell comprises a plurality of bulges, and at least part of the bulges is located at one end of the battery cell in the first direction; and in two battery cells adjacent to each other in the first direction, the bulges on the two battery cells, located at one ends close to each other in the first direction, are located in the same accommodation portion.

40. The battery according to any one of claims 1 to 39, wherein the battery assembly further comprises a sampling member, and at least part of the sampling member is accommodated in the accommodation portion;
and/or, the battery assembly further comprises a battery management system, and at least part of the battery management system is accommodated in the accommodation portion;
and/or, the battery assembly further comprises a relay, and at least part of the relay is accommodated in the accommodation portion;
and/or, the battery assembly further comprises a high-voltage distribution unit, and at least part of the high-voltage distribution unit is accommodated in the accommodation portion;
and/or, the battery assembly further comprises a high and low voltage wiring harness, and at least part of the high and low voltage wiring harness is accommodated in the accommodation portion.

41. The battery according to any one of claims 1 to 40, wherein the accommodation portion comprises a first accommodation sub-portion and a second accommodation sub-portion, a part of the protruding part is accommodated in a space of the first accommodation sub-portion, and the other part of the protruding part is accommodated in a space of the second accommodation sub-portion.

42. The battery according to any one of claims 1 to 41, wherein the bulge on an outer surface of the first housing wall forms a boss, and the boss is located on a side of the accommodation portion facing away from the accommodation cavity.

43. The battery according to claim 42, wherein a length direction of the boss is the same as that of the accommodation cavity, and sizes of the boss and the accommodation cavity in the length direction are the same;
or, the length direction of the boss is the same as a width direction of the accommodation cavity, and a length size of the boss is the same as a width size of the accommodation cavity.

44. The battery according to claim 42 or 43, wherein a width size of the boss does not exceed 500 mm;
and/or, a height size of the boss does not exceed 300 mm.

45. The battery according to claim 42 or 43, wherein a width size of the boss ranges from 50 mm to 300 mm;
and/or, a height size of the boss ranges from 5 mm to 100 mm.

46. The battery according to any one of claims 42 to 45, wherein the battery assembly further comprises a battery cell, the battery cell comprises a case, the case has a first case wall, the first case wall comprises a bulge, at least part of the bulge is located in the accommodation portion, and a height size of the bulge does not exceed 77% of a height size of the boss.

47. The battery according to claim 46, wherein the height size of the bulge accounts for a range of 36% to 53% of the height size of the boss.

48. The battery according to any one of claims 42 to 47, wherein a height size of the protruding part does not exceed 94% of the height size of the boss.

49. The battery according to claim 48, wherein the height size of the protruding part accounts for a range of 74% to 86% of the height size of the boss.

50. The battery according to any one of claims 42 to 49, wherein part or all of the boss is detachably configured.

51. The battery according to claim 50, wherein the first housing wall comprises a housing wall body and a mounting plate, the housing wall body is provided with a penetrating through hole, the through hole communicates with the accommodation cavity, an edge of the through hole is annularly provided with a mounting step extending in a direction away from the accommodation cavity, the mounting plate detachably covers the mounting step to seal the through hole, the mounting step and the mounting plate jointly form the boss, and an inner wall of the through hole and a surface of the mounting plate toward the accommodation cavity form the accommodation portion in an enclosing mode.

52. The battery according to any one of claims 1 to 51, wherein the battery comprises a first adhesive layer, and the first adhesive layer adheres between an inner wall of the accommodation cavity and the battery assembly.

53. The battery according to any one of claims 3 to 52, wherein the battery comprises a first adhesive layer, the accommodation portion is located on a top side of the accommodation housing in a height direction, a top wall of the battery cell in a height direction of the accommodation cavity is the first case wall, and the first adhesive layer adheres between an inner wall of a top side of the accommodation cavity in the height direction of the accommodation cavity and the first case wall;
and/or, the first adhesive layer adheres between an inner wall of a bottom side of the accommodation cavity in the height direction of the accommodation cavity and a bottom wall of the battery cell in the height direction of the accommodation cavity.

54. The battery according to any one of claims 1 to 53, wherein the battery comprises a temperature control assembly, and the temperature control assembly is sandwiched between the inner wall of the accommodation cavity and the battery assembly.

55. The battery according to claim 54, wherein the temperature control assembly is located between the inner wall of the accommodation cavity and the first case wall.

56. The battery according to claim 54, wherein the temperature control assembly is located between the inner wall of the top side of the accommodation cavity in the height direction of the accommodation cavity and a top surface of the battery assembly in the height direction of the accommodation cavity;
and/or, the temperature control assembly is located between the inner wall of the bottom side of the accommodation cavity in the height direction of the accommodation cavity and a bottom surface of the battery assembly in the height direction of the accommodation cavity.

57. The battery according to any one of claims 54 to 56, wherein the battery comprises a second adhesive layer, and the second adhesive layer adheres between the inner wall of the accommodation cavity and an outer surface of the temperature control assembly;
and/or, the battery comprises a third adhesive layer, and the third adhesive layer adheres between the inner wall of the accommodation cavity and an outer surface of the battery assembly.

58. An electrical apparatus, comprising the battery according to any one of claims 1 to 57, wherein the battery serves as a power source for the electrical apparatus.

59. The electrical apparatus according to claim 58, wherein the electrical apparatus is a vehicle, the vehicle comprises a seat and the battery according to any one of claims 42 to 57, and a boss is located on a side of an accommodation housing facing the seat.

60. The electrical apparatus according to claim 59, wherein the vehicle comprises a vehicle body element, a bottom side of the vehicle body element is open, the battery is disposed in an open position of the vehicle body element to jointly form an occupant space with the vehicle body element in an enclosing mode, and the seat is located in the occupant space.

61. The electrical apparatus according to claim 60, wherein the vehicle comprises a chassis, the vehicle body element is disposed on the chassis, the chassis comprises the battery, and a first housing wall forms a bottom plate of the occupant space.

62. The electrical apparatus according to any one of claims 59 to 61, wherein in projections perpendicular to a vertical direction, part or all of the projection of the boss is located in a projection range of the seat.

63. The electrical apparatus according to any one of claims 59 to 62, wherein a plurality of seats are provided and spaced apart to form at least one row, a first gap is formed between the seats in the same row spaced apart in a width direction of the vehicle, the boss comprises a first boss, and part or all of the first boss is located in the first gap.

64. The electrical apparatus according to claim 63, wherein the plurality of seats are divided into at least two rows spaced apart in a length direction of the vehicle, and the first boss extends in the length direction of the vehicle under another adjacent row of seats.

65. The electrical apparatus according to any one of claims 59 to 64, wherein the boss comprises a second boss, and the second boss extends in the length direction of the vehicle and is located on a side of the seat in the width direction of the vehicle.

66. The electrical apparatus according to claim 65, wherein the number of second bosses is two, the two second bosses are respectively located at one end of the battery in the width direction of the vehicle, and the seat is located between the two second bosses.

67. The electrical apparatus according to claim 65, wherein the second boss is spaced apart from the seat in the width direction of the vehicle;
and/or, part of the second boss is located under the seat.

68. The electrical apparatus according to any one of claims 59 to 67, wherein the boss comprises one or more third bosses, the third boss extends in the width direction of the vehicle, and at least part of the third boss is located under the seats in the same row.

69. The electrical apparatus according to any one of claims 59 to 68, wherein the seat comprises a seat base, a second gap is formed between at least part of the seat base and the battery which are spaced apart in a height direction of the vehicle, and at least part of the boss is located in the second gap and spaced apart from the seat base in the vertical direction.

70. The electrical apparatus according to claim 69, wherein the seat comprises a leg, the seat base is spaced apart from the battery in the vertical direction to form the second gap, and the leg is connected between the seat base and the battery.

71. The electrical apparatus according to claim 70, wherein a plurality of legs are provided, the plurality of legs are spaced apart in the width direction of the vehicle, and part or all of the boss is located between two legs adjacent to each other in the width direction of the vehicle.

72. The electrical apparatus according to any one of claims 69 to 71, wherein the seat base comprises a cushion, and the boss is embedded in the cushion to support the seat base in the height direction of the vehicle.
